(19) Europäisches Patentamt / European Patent Office / Office européen des brevets

(11) **EP 2 924 786 B1**

(12) **EUROPEAN PATENT SPECIFICATION**

(45) Date of publication and mention
of the grant of the patent:
**24.10.2018 Bulletin 2018/43**

(51) Int Cl.:
*H01M 4/66* (2006.01)     *H01M 4/64* (2006.01)
*H01M 10/052* (2010.01)     *H01M 10/0585* (2010.01)

(21) Application number: **13856240.0**

(22) Date of filing: **18.11.2013**

(86) International application number:
**PCT/JP2013/080981**

(87) International publication number:
**WO 2014/080853 (30.05.2014 Gazette 2014/22)**

(54) **COLLECTOR FOR BIPOLAR LITHIUM ION SECONDARY BATTERIES, AND BIPOLAR LITHIUM ION SECONDARY BATTERY**

KOLLEKTOR FÜR BIPOLARE LITHIUM-IONEN-SEKUNDÄRBATTERIEN UND BIPOLARE LITHIUM-IONEN-SEKUNDÄRBATTERIE

COLLECTEUR POUR BATTERIES SECONDAIRES BIPOLAIRES AU LITHIUM-ION, ET BATTERIE SECONDAIRE BIPOLAIRE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012   JP 2012256660**
**22.11.2012   JP 2012256667**

(43) Date of publication of application:
**30.09.2015   Bulletin 2015/40**

(73) Proprietors:
• **Kaneka Corporation**
**Osaka-shi, Osaka 530-8288 (JP)**
• **NISSAN MOTOR CO., LTD.**
**Yokohama-shi, Kanagawa 221-0023 (JP)**

(72) Inventors:
• **KIKUCHI Takashi**
**Osaka 566-0072 (JP)**
• **YANAGIDA Masami**
**Osaka 566-0072 (JP)**
• **ITO Takashi**
**Osaka 566-0072 (JP)**
• **OGAWA Kohei**
**Osaka 566-0072 (JP)**
• **OKU Satoshi**
**Osaka 566-0072 (JP)**
• **WAKABAYASHI Keisuke**
**Kanagawa 221-0023 (JP)**
• **WAKI Norihisa**
**Kanagawa 221-0023 (JP)**
• **MUROYA Yuji**
**Kanagawa 221-0023 (JP)**
• **SHIMOIDA Yoshio**
**Kanagawa 221-0023 (JP)**
• **ISHIMOTO Seiji**
**Kanagawa 221-0023 (JP)**
• **MATSUNO Tomohisa**
**Kanagawa 221-0023 (JP)**

(74) Representative: **Vossius & Partner**
**Patentanwälte Rechtsanwälte mbB**
**Siebertstrasse 3**
**81675 München (DE)**

(56) References cited:
JP-A- 2008 034 352     JP-A- 2009 238 659
JP-A- 2011 181 520     JP-A- 2011 181 520
JP-A- 2011 210 635     JP-A- 2012 003 918
JP-A- 2012 204 182     US-A1- 2011 311 871
US-A1- 2012 171 567

• Anonymous: "Vespel - Wikipedia, the free encyclopedia", , 29 February 2012 (2012-02-29), XP055263625, Retrieved from the Internet: URL:https://en.wikipedia.org/w/index.php?t itle=Vespel&oldid=479517521 [retrieved on 2016-04-07]

**Description**

Technical Field

The present invention relates to a collector for bipolar lithium ion secondary batteries and a bipolar lithium ion secondary battery including the collector.

Background Art

In recent years, there is a demand for compact batteries having high power density as power sources for vehicles and cell phones for the purpose of environmental protection. Specifically, lithium ion secondary batteries, which contain an active material having high power density, have received attention, and various members have been developed for such batteries.

A collector, which is one of the members, typically includes a metal foil, whereas a collector plate for redox flow secondary batteries disclosed in Patent Document 1 is made from an electroconductive resin containing carbon and two or more polyolefin copolymers, thereby improving the balance between electric conductivity and brittleness, for example.

Patent Document 2 relates to a sealing structure of a bipolar battery comprising a resin collector containing thermosetting resin; and a sealing assembly formed by adhering a first sealing layer consisting of thermosetting resin to a second sealing layer consisting of thermoplastic resin, wherein the first sealing layer of the sealing assembly is adhered to the resin and sealed a contact area of the sealing assembly and the resin collector.

Patent Document 3 discloses a negative electrode for lithium secondary batteries comprising a negative electrode current collector; and a negative electrode active material layer formed on the negative electrode current collector, wherein the negative electrode active material layer comprises a binder and negative electrode active material particles containing at least one of silicon and a silicon alloy, wherein the binder is a polyimide resin formed by imidization of a tetracarboxylic acid or tetracarboxylic anhydride and a diamine comprising at least one hydroxyl group.

Patent Document 4 describes that, in a bipolar battery, a metal foil having non-ionic conductivity and covering layers with electron conductivity is used for a current collector.

According to Wikipedia.org, the term "Vespel" is a trademark of a range of certain polyimide-based plastics manufactured by DuPont.

Citation List

Patent Literature

**[0004]**

　　Patent Document 1: JP-A No. 2000-200619
　　Patent Document 2: US 2012/171567
　　Patent Document 3: US 2011/311871
　　Patent Document 4: JP 2011/181520

Summary of Invention

Technical Problem

The present invention has an object to provide a collector for bipolar lithium ion secondary batteries having excellent solvent barrier properties and including a polyimide resin layer in which a conductivity-imparting agent is dispersed.

Solution to Problem

Polyimide has excellent heat resistance and mechanical strength and thus is stably usable without deformation or other defects even in a roll-to-roll electrode coating step and a lamination step. On this account, a collector produced by dispersing a conductivity-imparting agent in a polyimide resin is very promising.

However, to use a collector produced by dispersing a conductivity-imparting agent in a polyimide resin as the collector for bipolar lithium ion secondary batteries, solvent barrier properties are required. Lithium ions are known to solvate with solvents in an electrolytic solution. If a collector having poor solvent barrier properties is used, the solvated lithium ions may infiltrate into a collector, and this may lower the lithium ion concentration in an electrolytic solution to reduce the battery capacity.

It is generally well-known that the polyimide resin has excellent heat resistance and mechanical strength as mentioned above. However, there is no knowledge about the degree of the solvent barrier properties of the polyimide resin and the controllability of a primary structure.

As a result of intensive studies for solving the problems, the inventors of the present invention have found that a polyimide resin having a particular primary structure provides excellent solvent barrier properties and have completed the present invention.

In other words, the present invention is a collector for bipolar lithium ion secondary batteries (hereinafter, also simply called "collector of the present invention") including an electroconductive polyimide layer including a conductivity-imparting agent dispersed in a polyimide resin that is prepared by imidizing a polyamic acid that is obtained by reacting a tetracarboxylic dianhydride component containing at least one compound selected from the group consisting of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides with a diamine component containing at least one compound selected from the group consisting of oxydianilines, phenylenediamines, and 2,2-bis[4-(4-aminophenoxy)phenyl]propane, wherein a metal layer having a thickness of 0.01 to 2 $\mu$m is formed on at least one side of the electroconductive polyimide layer.

In the collector of the present invention, it is preferable that the at least one tetracarboxylic dianhydride selected from the group consisting of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides be contained in an amount of 50% by mole or more in the whole tetracarboxylic dianhydride component.

In the collector of the present invention, it is preferable that the at least one diamine selected from the group consisting of oxydianilines, phenylenediamines, and 2,2-bis[4-(4-aminophenoxy)phenyl]propane be contained in an amount of 50% by mole or more in the whole diamine component.

In the collector of the present invention, it is preferable that the polyimide resin satisfy conditions (1) and (2):

(1) having an inflection point of storage elastic modulus between 200 and 280°C in a dynamic viscoelastic measurement; and
(2) A1 and A2 satisfying (Formula 1):

$$50 \geq [(A2/A1) \times 100] \geq 0.1 \qquad (\text{Formula 1})$$

where A1 is a storage elastic modulus at a temperature of the inflection point - 20°C, and A2 is a storage elastic modulus at a temperature of the inflection point + 20°C.

In the collector of the present invention, it is preferable that the conductivity-imparting agent be carbon conductive particles.

In the collector of the present invention, it is preferable that the electroconductive polyimide layer contain the conductivity-imparting agent and the polyimide resin in a range of conductivity-imparting agent:polyimide resin = 1:99 to 99:1 in terms of weight ratio.

In the collector of the present invention, it is preferable that the electroconductive polyimide layer have a thickness of 1 to 100 $\mu$m.

In the collector of the present invention, it is preferable that the metal layer be formed of at least one metal selected from the group consisting of gold, silver, copper, platinum, nickel, and chromium.

The collector of the present invention may further include a metal layer formed by electroplating on the metal layer.

In the collector of the present invention, it is preferable that the metal layer formed by electroplating contain any one metal selected from the group consisting of gold, silver, copper, platinum, nickel, and chromium.

In the collector of the present invention including the metal layer formed by electroplating, it is preferable that the final metal layer have a thickness of 0.1 to 5 $\mu$m.

A bipolar lithium secondary battery of the present invention includes the collector of the present invention.

Advantageous Effects of Invention

The collector of the present invention has excellent solvent barrier properties. By using the collector of the present invention, a highly reliable bipolar lithium ion secondary battery is obtained.

Brief Description of Drawings

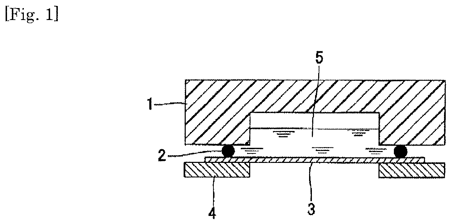

Fig. 1 is a schematic view showing measurement of solvent barrier properties to an electrolytic solution in examples of the present invention.

Description of Embodiments

Embodiments of the present invention will be described below, but the present invention is not limited to them.
A collector of the present invention is characterized by including an electroconductive polyimide layer including a conductivity-imparting agent dispersed in a polyimide resin that is prepared by imidizing a polyamic acid that is obtained by reacting a tetracarboxylic dianhydride component containing at least one compound selected from the group consisting of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides with a diamine component containing at least one compound selected from the group consisting of oxydianilines, phenylenediamines, and 2,2-bis[4-(4-aminophenoxy)phenyl] propane.
wherein a metal layer having a thickness of 0.01 to 2 $\mu$m is formed on at least one side of the electroconductive polyimide layer.
First, the tetracarboxylic dianhydride component will be described.
The biphenyltetracarboxylic dianhydride is exemplified by 2,3,3',4'-biphenyltetracarboxylic dianhydride and 3,3',4,4'-biphenyltetracarboxylic dianhydride, and may be any biphenyltetracarboxylic dianhydride. The biphenyltetracarboxylic dianhydrides may be used singly or as a mixture.
The [isopropylidenebis(p-phenyleneoxy)]diphthalic dianhydride is exemplified by 3,3'-[isopropylidenebis(p-phenyleneoxy)]diphthalic dianhydride, 3,4'- [isopropylidenebis(p-phenyleneoxy)] diphthalic dianhydride, and 4,4'-[isopropylidenebis(p-phenyleneoxy)]diphthalic dianhydride, and may be any [isopropylidenebis(p-phenyleneoxy)]diphthalic dianhydride. The [isopropylidenebis(p-phenyleneoxy)]diphthalic dianhydrides may be used singly or as a mixture.
In addition to the above-mentioned at least one tetracarboxylic dianhydride component of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides, other tetracarboxylic dianhydrides may be used in combination as the tetracarboxylic dianhydride. Specific examples of the other tetracarboxylic dianhydride include 2,3,6,7-naphthalenetetracarboxylic dianhydride, 1,2,5,6-naphthalenetetracarboxylic dianhydride, 4,4'-oxydiphthalic dianhydride, 2,2-bis(3,4-dicarboxyphenyl)propane dianhydride, 3,4,9,10-perylenetetracarboxylic dianhydride, bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, bis(2,3-dicarboxyphenyl)methane dianhydride, bis(3,4-dicarboxyphenyl)ethane dianhydride, bis(3,4-dicarboxyphenyl) sulfone dianhydride, p-phenylenebis(trimellitic acid monoester anhydride), ethylenebis(trimellitic acid monoester anhydride), bisphenol A bis(trimellitic acid monoester anhydride), and analogues thereof. These compounds may be used singly or in combination of two or more of them.
In these tetracarboxylic dianhydrides, the amount of the at least one tetracarboxylic dianhydride selected from biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides is preferably 50% by mole or more, more preferably 70% by mole or more, and even more preferably 80% by mole or more relative to the total amount (100% by mole) of the tetracarboxylic dianhydride component. If the amount is less than the range, the collector may have lower mechanical strength or lower heat resistance.
Next, the diamine component will be described.
The oxydianiline used in the present invention is exemplified by 3,4'-oxydianiline and 4,4'-oxydianiline, and may be any oxydianiline. The oxydianilines may be used singly or as a mixture. From the viewpoint of material costs and reactivity, 4,4'-oxydianiline is preferably used.
The phenylenediamine is exemplified by o-phenylenediamine, m-phenylenediamine, and p-phenylenediamine, and may be any phenylenediamine. The phenylenediamines may be used singly or as a mixture. From the viewpoint of achieving preferred properties and material costs, p-phenylenediamine is preferably used.
In addition to the at least one diamine component of oxydianilines, phenylenediamines, and 2,2-bis[4-(4-aminophenoxy)phenyl]propane, other diamines may be used in combination as the diamine component. Specific examples of the other diamine include 4,4'-diaminodiphenylpropane, 4,4'-diaminodiphenylmethane, benzidine, 3,3'-dichlorobenzidine, 3,3'-dimethylbenzidine, 2,2'-dimethylbenzidine, 3,3'-dimethoxybenzidine, 2,2'-dimethoxybenzidine, 4,4'-diaminodiphenyl sulfide, 3,3'-diaminodiphenyl sulfone, 4,4'-diaminodiphenyl sulfone, 1,5-diaminonaphthalene, 4,4'-diaminodiphenylethylphosphine oxide, 4,4'-diaminodiphenyl-N-methylamine, 4,4'-diaminodiphenyl-N-phenylamine, bis{4-(4-aminophenoxy)phenyl} sulfone, bis{4-(3-aminophenoxy)phenyl} sulfone, 4,4'-bis(4-aminophenoxy)biphenyl, 4,4'-bis(3-aminophenoxy)biphenyl, 1,3-bis(3-aminophenoxy)benzene, 1,3-bis(4-aminophenoxy)benzene, 1,4-bis(4-aminophenoxy)benzene, 3,3'-diaminobenzophenone, 4,4'-diaminobenzophenone, and analogues thereof. These compounds may be used singly or in combination of two or more of them.

In these diamines, the amount of the at least one diamine selected from oxydianilines, phenylenediamines, and 2,2-bis[4-(4-aminophenoxy)phenyl]propane is preferably 50% by mole or more, more preferably 70% by mole or more, and even more preferably 80% by mole or more relative to the total amount (100% by mole) of the diamine component. If the amount is less than the range, the collector may have lower mechanical strength or lower heat resistance.

The collector of the present invention is for bipolar lithium ion secondary batteries, and preferably has an electric conductivity that is selectively increased in a direction perpendicular to the surface of the collector. For a collector containing a polymer material as in the present invention, conductive particles are typically dispersed in the material. At this time, the conductive particles are uniformly dispersed in the material, and thus it is not easy to make a collector have different electric conductivities between the surface direction and the direction perpendicular to the surface. When a polymer material in which conductive particles are dispersed is drawn, polymer chains are molecular-oriented in the surface direction, and the conductive particles are arranged along the polymer chains. It is thus technically easy to increase the electric conductivity in the surface direction. However, to increase the electric conductivity in the direction perpendicular to the surface, the drawing has the opposite effect and is inapplicable. In addition, some polymer materials show anisotropy due to molecular orientation when used to form a film, and are likely to be oriented particularly in the surface direction. This also makes the increase in electric conductivity only in the direction perpendicular to the surface difficult.

Compression of a collector after film formation in the direction perpendicular to the surface by heat press allows an increase in the concentration of conductive particles in the direction perpendicular to the surface to form conductive paths, thereby enabling an increase in the electric conductivity. However, an additional step of heat press lowers the productivity. In addition, the deformation by heat and pressure deteriorates the appearance of a film.

The above-described problems about the difference in electric conductivity between the surface direction and the direction perpendicular to the surface are marked when an imidization accelerator is used for the imidization of a polyamic acid. However, the imidization without any imidization accelerator proceeds at a lower speed and is likely to lower the productivity. To address the problem, controlling the viscoelastic behavior of the polyimide resin in a high temperature region enables a selective increase in the electric conductivity in the direction perpendicular to the surface through no specific process.

In other words, in the collector of the present invention, the polyimide resin preferably satisfies the following conditions (1) and (2):

(1) having an inflection point (hereinafter also called "glass transition temperature") of storage elastic modulus between 200 and 280°C in a dynamic viscoelastic measurement; and
(2) A1 and A2 satisfying (Formula 1):

$$50 \geq [(A2/A1) \times 100] \geq 0.1 \qquad \text{(Formula 1)}$$

where A1 is a storage elastic modulus at a temperature of the inflection point - 20°C, and A2 is a storage elastic modulus at a temperature of the inflection point + 20°C.

In the present invention, the dynamic viscoelastic measurement is a method in which a strain or stress varying (vibrating) with time is applied to a sample while the sample is heated at a constant temperature increase rate, and the generated stress or strain is measured to determine mechanical properties of the sample.

The polyimide resin used in the electroconductive polyimide layer of the present invention preferably has an inflection point (glass transition temperature) of storage elastic modulus between 200 to 280°C in the dynamic viscoelastic measurement, and more preferably has a glass transition temperature of 220 to 260°C from the viewpoint of the balance between the appearance and the electric conductivity. If the glass transition temperature is lower than the temperature range, such an electroconductive polyimide layer may become excessively soft due to heat during film formation and may fail to maintain self-supporting properties. In addition, in a step of using the collector including the electroconductive polyimide layer of the present invention to produce a battery, specifically in a step of applying and drying an active material slurry to prepare an electrode, such an electroconductive polyimide layer can be deformed by heat during the drying, and thus can cause defects. Conversely, if the glass transition temperature is higher than the temperature range, the heating during film formation requires an excessively high temperature for achieving the electric conductivity in the direction perpendicular to the surface, and thus the polyimide resin can be thermally decomposed together during the heating.

The polyimide resin used in the electroconductive polyimide layer of the present invention preferably has such A1 and A2 that the relation of Formula (1):

$$50 \geq [(A2/A1) \times 100] \geq 0.1 \qquad (\text{Formula 1})$$

is satisfied, where A1 is a storage elastic modulus at a temperature 20°C lower than an inflection point of storage elastic modulus in the dynamic viscoelastic measurement, and A2 is a storage elastic modulus at a temperature 20°C higher than the inflection point.

If the relation between A1 and A2 (hereinafter also called "amount of change in storage elastic modulus") is larger than the above range, the electroconductive polyimide layer can be insufficiently softened, resulting in insufficient effect of improving the electric conductivity in a direction perpendicular to the surface. Conversely, if the relation is smaller than the range, the polyimide resin may become too soft to maintain self-supporting properties during heating, and the resulting electroconductive polyimide layer can have a greatly deteriorated appearance. From the viewpoint of the balance between the appearance and the electric conductivity, [(A2/A1) $\times$ 100] in Formula (1) is preferably 0.5 or more and 30 or less and more preferably 1 or more and 25 or less.

In the present invention, such a polyimide that both the inflection point (glass transition temperature) of storage elastic modulus in the dynamic viscoelastic measurement and the storage elastic modulus at a predetermined temperature fall within the above ranges is preferably selected. If satisfying both the characteristics, the polyimide resin is appropriately softened during heating, and the distribution of conductive particles in the polyimide layer is accordingly changed. Hence, even when a material that is likely to be oriented in the surface direction is used, the electric conductivity in a direction perpendicular to the surface can be selectively increased.

The means to make the glass transition temperature and the storage elastic modulus of the polyimide resin fall within the ranges is exemplified by selection of raw materials to be used. The material monomers for the polyimide resin include monomers having a soft skeleton and monomers having a rigid skeleton. Appropriate selection of these monomers and control of the blending ratio enable a polyimide resin to have an intended glass transition temperature and an intended storage elastic modulus. The polyimide resin used in the electroconductive polyimide layer of the present invention is made from a particular diamine and a particular acid dianhydride as raw materials. In combination with these raw materials, material monomers having a soft skeleton and material monomers having a rigid skeleton may be used.

Examples of the diamine having a soft skeleton include 4,4'-oxydianiline, 4,4'-diaminodiphenylpropane, 4,4'-diaminodiphenylmethane, 4,4'-diaminodiphenyl sulfide, 3,3'-diaminodiphenyl sulfone, 4,4'-diaminodiphenyl sulfone, 3,3'-oxydianiline, 3,4'-oxydianiline, 4,4'-diaminodiphenyldiethylsilane, 4,4'-diaminodiphenylsilane, 4,4'-diaminodiphenylethylphosphine oxide, 4,4'-diaminodiphenyl-N-methylamine, 4,4'-diaminodiphenyl-N-phenylamine, bis{4-(4-aminophenoxy)phenyl} sulfone, 2,2'-bis{4-(4-aminophenoxy)phenyl}propane, bis{4-(3-aminophenoxy)phenyl} sulfone, 4,4'-bis(4-aminophenoxy)biphenyl, 4,4'-bis(3-aminophenoxy)biphenyl, 1,3-bis(3-aminophenoxy)benzene, 1,3-bis(4-aminophenoxy)benzene, 3,3'-diaminobenzophenone, and 4,4'-diaminobenzophenone.

Examples of the diamine having a rigid skeleton include benzidine, 3,3'-dichlorobenzidine, 3,3'-dimethylbenzidine, 2,2'-dimethylbenzidine, 3,3'-dimethoxybenzidine, 2,2'-dimethoxybenzidine, 1,5-diaminonaphthalene, 1,4-diaminobenzene(p-phenylenediamine), 1,3-diaminobenzene, and 1,2-diaminobenzene.

Among them, from the viewpoint of the control of thermal properties and industrially easy availability, 4,4'-oxydianiline, 4,4'-diaminodiphenylpropane, 4,4'-diaminodiphenylmethane, 3,3'-diaminodiphenyl sulfone, 4,4'-diaminodiphenyl sulfone, 3,3'-oxydianiline, 3,4'-oxydianiline, bis{4-(4-aminophenoxy)phenyl} sulfone, 2,2'-bis{4-(4-aminophenoxy)phenyl}propane, bis{4-(3-aminophenoxy)phenyl} sulfone, 1,3-bis(3-aminophenoxy)benzene, 1,3-bis(4-aminophenoxy)benzene, 3,3'-diaminobenzophenone, and 4,4'-diaminobenzophenone can be preferably used as the diamine having a soft skeleton. In particular, 4,4'-oxydianiline and 2,2'-bis{4-(4-aminophenoxy)phenyl}propane can be preferably used. As the diamine having a rigid skeleton, 1,4-diaminobenzene(p-phenylenediamine) and 1,3-diaminobenzene can be preferably used from the viewpoint of providing the effect of hardening polymer chains in a comparatively small amount and industrially easy availability. In particular, 1,4-diaminobenzene(p-phenylenediamine) can be preferably used. These diamines may be used as a mixture of two or more of them.

Examples of the tetracarboxylic dianhydride having a soft skeleton include 3,3',4,4'-biphenyltetracarboxylic dianhydride, 2,3,3',4'-biphenyltetracarboxylic dianhydride, 3,3',4,4'-benzophenonetetracarboxylic dianhydride, 4,4'-oxydiphthalic dianhydride, 2,2-bis(3,4-dicarboxyphenyl)propane dianhydride, bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, bis (2,3-dicarboxyphenyl)methane dianhydride, bis(3,4-dicarboxyphenyl)ethane dianhydride, bis(3,4-dicarboxyphenyl) sulfone dianhydride, p-phenylenebis(trimellitic acid monoester anhydride), ethylenebis(trimellitic acid monoester anhydride), and bisphenol A bis(trimellitic acid monoester anhydride).

Examples of the tetracarboxylic dianhydride having a rigid skeleton include pyromellitic dianhydride, 2,3,6,7-naphthalenetetracarboxylic dianhydride, 1,2,5,6-naphthalenetetracarboxylic dianhydride, and 3,4,9,10-perylenetetracarboxylic dianhydride.

Among them, from the viewpoint of the control of thermal properties and industrially easy availability, 3,3',4,4'-biphenyltetracarboxylic dianhydride, 2,3,3',4'-biphenyltetracarboxylic dianhydride, 3,3',4,4'-benzophenonetetracarboxylic dianhydride, and 4,4'-oxydiphthalic dianhydride can be preferably used as the tetracarboxylic dianhydride having a soft skeleton. Even more preferably, 3,3',4,4'-biphenyltetracarboxylic dianhydride, 2,3,3',4'-biphenyltetracarboxylic dianhydride, and 3,3',4,4'-benzophenonetetracarboxylic dianhydride can be preferably used. As the tetracarboxylic dianhydride having a rigid skeleton, pyromellitic dianhydride can be preferably used from the viewpoint of providing the effect of hardening polymer chains in a comparatively small amount and industrially easy availability. These tetracarboxylic dianhydrides may be used as a mixture of two or more of them.

The polyimide resin used in the present invention can be obtained by any known method. An exemplified method is as follows: Substantially equimolar amounts of a tetracarboxylic dianhydride and a diamine are dissolved in an organic solvent and polymerized to give a polyamic acid; and then the polyamic acid is imidized while the solvent is evaporated.

Synthesis of the polyamic acid will next be described.

The polyamic acid can be produced by any known method and is typically produced as follows: Substantially equimolar amounts of a tetracarboxylic dianhydride and a diamine compound are dissolved in an organic solvent; and the solution is stirred in a controlled temperature condition until the polymerization of the tetracarboxylic dianhydride and the diamine compound is completed.

The solvent preferred for the synthesis of the polyamic acid may be any solvent that can dissolve the polyamic acid. Amide solvents such as N,N-dimethylformamide, N,N-dimethylacetamide, and N-methyl-2-pyrrolidone are preferred, and N,N-dimethylformamide and N,N-dimethylacetamide can be particularly preferably used. These solvents may be used singly or as a mixture of two or more of them.

The polyamic acid solution typically preferably has a concentration of 5 to 35% by weight and more preferably 10 to 30% by weight. The solution having a concentration within the range can have an appropriate molecular weight and an appropriate solution viscosity.

The polymerization method may be any known method or a combination method thereof. The polymerization method for production the polyamic acid is characterized by the addition order of monomers, and control of the monomer addition order enables a resulting polyimide to have controlled physical properties. Thus, monomers may be added by any method for the polymerization of the polyamic acid in the present invention. A typical polymerization method is exemplified by the following methods:

(1) a polymerization method in which a diamine compound is dissolved in a polar organic solvent and is reacted with a substantially equimolar amount of a tetracarboxylic dianhydride;
(2) a polymerization method in which a tetracarboxylic dianhydride is reacted with a smaller molar amount of a diamine compound in a polar organic solvent to give a prepolymer having an acid anhydride group at each terminal, and subsequently the diamine compound is added in such an amount that the molar amounts of the tetracarboxylic dianhydride and the diamine compound are substantially equal in the whole steps;
(3) a polymerization method in which a tetracarboxylic dianhydride is reacted with a larger molar amount of a diamine compound in a polar organic solvent to give a prepolymer having an amino group at each terminal, subsequently the diamine compound is further added, and then the tetracarboxylic dianhydride is added in such an amount that the molar amounts of the tetracarboxylic dianhydride and the diamine compound are substantially equal in the whole steps;
(4) a polymerization method in which a tetracarboxylic dianhydride is dissolved and/or dispersed in a polar organic solvent, and then a diamine compound is added in such an amount that the molar amounts are substantially equal; and
(5) a polymerization method in which a mixture of substantially equimolar amounts of a tetracarboxylic dianhydride and a diamine compound is reacted in a polar organic solvent.

These methods may be used singly or may be partially combined.

The conductivity-imparting agent and a method of dispersing the agent will next be described.

The conductivity-imparting agent used in the present invention is not limited to particular agents and may be any electroconductive filler that is containable in what is called a filler electroconductive resin composition. Examples of the agent include aluminum particles, stainless steel particles, carbon conductive particles, silver particles, gold particles, copper particles, titanium particles, and alloy particles. Among them, carbon conductive particles can be suitably used because the particles have a very wide potential window, are stable in a wide range of both positive electrode potential and negative electrode potential, and have excellent electric conductivity. In addition, the carbon conductive particles are very lightweight and thus minimize the increase in mass. The carbon conductive particles are often used as a conductive auxiliary agent for an electrode, and thus even if the carbon conductive particles come into contact with the conductive auxiliary agent, the contact resistance is very low because of the same material. Specific examples of the carbon conductive particles include carbon blacks such as acetylene black and Ketjenblack, graphite, graphene, and carbon nanotubes. Among them, carbon blacks and carbon nanotubes are preferred because the material itself has a comparatively high electric conductivity, and an intended high electric conductivity is readily achieved by addition in a small amount to a resin. Specifically, #3950B (manufactured by Mitsubishi Chemical Corporation), Black Pearls 2000 (manufactured by Cabot Corporation), Printex XE2B (manufactured by Degussa), Ketjenblack EC-600JD (manufactured by Lion Corporation), ECP-600JD (manufactured by Lion Corporation), EC-300J (manufactured by Lion Corporation), and ECP (manufactured by Lion Corporation) can be preferably used due to particularly excellent electric conductivity.

When the carbon conductive particles are used as the conductive particles, the surface of the carbon conductive particles can be subjected to hydrophobic treatment to reduce the wettability with an electrolyte, and this can make conditions where the electrolyte is unlikely to infiltrate into pores of the collector.

In the electroconductive polyimide layer of the present invention, the blending ratio of the conductivity-imparting agent and the polyimide resin is preferably in a range of 1:99 to 99:1, more preferably 1:99 to 50:50, even more preferably 5:95 to 40:60, and most preferably 10:90 to 20:80, in terms of weight ratio. When having a blending ratio within the preferred range, the electroconductive polyimide layer maintains the electric conductivity, does not impair the function as a collector, has a strength sufficient for a collector, and can be easily handled.

The method for dispersing the conductivity-imparting agent in the polyimide resin is exemplified by a method in which the conductivity-imparting agent is dispersed in a polyamic acid solution and then the polyamic acid is converted into a polyimide and a method in which a powdery polyimide resin is mixed with the conductivity-imparting agent and then the mixture is molded into an intended shape, but any method can be used. In consideration of the dispersibility of the conductivity-imparting agent and the processability into a film, the method in which the conductivity-imparting agent is dispersed in a polyamic acid solution and then the polyamic acid is converted into a polyimide is suitably usable.

The method for dispersing the conductivity-imparting agent in a polyamic acid solution is exemplified by

(1) a method of adding the conductivity-imparting agent to a polymerization liquid before or during polymerization;
(2) a method of kneading the conductivity-imparting agent with a triple-roll mill or a similar apparatus after the completion of polymerization; and
(3) a method of mixing a dispersion liquid containing the conductivity-imparting agent with a polyamic acid solution, and

any method can be used.

Among these methods, the method (3) of mixing a dispersion liquid containing the conductivity-imparting agent with a polyamic acid solution, specifically a method of mixing them immediately before the preparation of a coating liquid is preferred, in terms of minimizing the contamination in a production line by the conductivity-imparting agent. To prepare a dispersion liquid containing the conductivity-imparting agent, the same solvent as the polymerization solvent of a polyamic acid is preferably used. In order to finely disperse the conductivity-imparting agent and stabilize the dispersion state, a dispersant, a thickener, and other additives may be used to such an extent that film physical properties are not affected. In terms of easily, stably dispersing the conductivity-imparting agent without aggregation, a small amount of a polyamic acid solution that is a precursor of the polyimide is preferably added as the dispersant.

For the dispersion, a ball mill, a bead mill, a sand mill, a colloid mill, a jet mill, or a roller mill is preferably used, for example. When a means such as a bead mill and a ball mill is used to disperse a conductivity-imparting agent so as to give a flowable liquid, such a polyamic acid solution in which the conductivity-imparting agent is dispersed is easily handled for film formation. The median diameter is not limited to particular values but is preferably 10 mm or less.

In order to improve various characteristics, such as slipping properties, slidability, heat conductivity, corona resistance, and loop stiffness, of a finally obtained collector for bipolar lithium ion secondary batteries, a filler may be used. Any filler can be used, and preferred examples of the filler include silica, titanium oxide, alumina, silicon nitride, boron nitride, calcium hydrogen phosphate, calcium phosphate, and mica.

The particle size of the filler is set depending on characteristics to be modified and a type of the filler to be added and thus is not limited to particular values. The average particle size is typically, preferably 0.05 to 100 $\mu$m, more preferably 0.1 to 75 $\mu$m, even more preferably 0.1 to 50 $\mu$m, and particularly preferably 0.1 to 25 $\mu$m. If having a particle size less than the range, the filler is unlikely to provide the modification effect. If having a particle size more than the range, the filler may greatly impair a surface nature or may greatly reduce the film strength of a film to be produced.

The amount of the filler is set depending on characteristics to be modified and a particle size of the filler and thus is not limited to particular values. The amount of the filler is typically, preferably 0.01 to 100 parts by weight, more preferably 0.01 to 90 parts by weight, and even more preferably 0.02 to 80 parts by weight relative to 100 parts by weight of the polyimide. If the amount of the filler is less than the range, the filler is unlikely to provide the modification effect. If the amount of the filler is more than the range, the filler may greatly reduce the film strength of a film to be produced.

The method of adding the filler can be the same as the method of dispersing the conductivity-imparting agent, and the filler may be added concurrently with the dispersion of the conductivity-imparting agent or may be added separately.

The imidization of the polyamic acid will be described. The conversion reaction from the polyamic acid into the polyimide can be a known process such as thermal imidization simply by heat and chemical imidization with an imidization accelerator.

For the chemical imidization, the imidization accelerator simply contains a catalyst and a chemical dehydrating agent and can further contain a solvent. The solvent is particularly preferably the same as that contained in the polyamic acid solution.

As the catalyst, a tertiary amine compound can be suitably used. Specifically preferred examples of the compound include quinoline, isoquinoline, 3,5-dimethylpyridine, 3,5-diethylpyridine, α-picoline, β-picoline, and γ-picoline. These compounds may be used singly or as a mixture of two or more of them.

The amount of the catalyst is preferably 0.1 to 4.0 molar equivalents, more preferably 0.3 to 3.0 molar equivalents, and even more preferably 0.5 to 2.0 molar equivalents relative to 1 mole of an amic acid in the polyamic acid. If the amount is less than 0.1 molar equivalent, the catalyst may work insufficiently, and the imidization may fail to proceed completely, resulting in a reduction in the film strength. If the amount is more than 4.0 molar equivalents, the catalyst hardly provides a higher effect in proportion to a larger amount. In addition, it becomes difficult to evaporate solvents in a series of heat treatments, and larger amounts of the solvents may remain, resulting in a reduction in the film strength of a film to be obtained.

The chemical dehydrating agent is not limited to particular agents. Preferred examples of the agent include aliphatic acid anhydrides, aromatic acid anhydrides, and halogenated lower fatty acid anhydrides. These agents may be used singly or as a mixture of two or more of them. Among the chemical dehydrating agents, particularly preferred compounds are acetic anhydride and propionic anhydride. As with the above, these compounds may be used singly or as a mixture of two or more of them.

The amount of the chemical dehydrating agent is preferably 1.0 to 5.0 molar equivalents, more preferably 1.2 to 4.0 molar equivalents, and even more preferably 1.5 to 3.0 molar equivalents relative to 1 mole of an amic acid in the polyamic acid. If the amount is less than 1.0 molar equivalent, the imidization by the chemical dehydrating agent may fail to proceed completely, resulting in a reduction in the film strength of a film to be obtained. If the amount is more than 5.0 molar equivalents, the imidization proceeds for a short period to form a gel, which may interfere with the formation of a coating.

The temperature when the imidization accelerator is added to the polyamic acid or a solution thereof is preferably 10°C or less, more preferably 5°C or less, and even more preferably 0°C or less. If the temperature is higher than 10°C, the imidization proceeds for a short period to form a gel, and thus such a temperature may be unsuitable for stable, long-term production.

The collector for bipolar lithium ion secondary batteries of the present invention will next be described.

The collector of the present invention can be formed from an electroconductive polyimide film that has been produced independently. The method of producing the electroconductive polyimide film may be a conventionally known method, but a method of forming a coating of a polyamic acid solution in which a conductivity-imparting agent is dispersed and then evaporating solvents is most preferred from the viewpoint of productivity and a uniformity of a film to be obtained. The method will be described below.

The application method for forming a coating may be an appropriate known method such as die coating, spraying, roll coating, spin coating, bar coating, ink-jetting, screen printing, and slit coating. Any substrate may be used, and examples of the substrate include metal drums, metal belts, metal foils, metal plates, and separately produced resin films. A coating is dried at a temperature from room temperature to about 200°C, for example, giving a self-supporting film. The imidization proceeds to some extent during the drying. The imidization of the self-supporting film after drying is performed as follows, for example: The film is fixed, then subjected to primary heating to about 300°C while the heating speed is appropriately adjusted, and further subjected to secondary heating at a high temperature up to about 600°C. Consequently, an electroconductive polyimide film is obtained. To fix the self-supporting film, a known method such as a pin tenter system, a clip tenter system, and a roll suspension system can be appropriately adopted, and the self-supporting film can be fixed by any system.

The heating temperature for the imidization can be appropriately set. The heating temperature is preferably high in terms of productivity because the imidization readily proceeds at a higher temperature, and the heating speed can be accelerated. However, an excessively high temperature may cause thermal decomposition, and a resulting polyimide unfortunately has a lower storage elastic modulus than that capable of maintaining self-supporting properties, resulting in a poor appearance of a film to be obtained. If the heating temperature is excessively low, the imidization is unlikely to proceed to elongate the time required for a film formation step. In addition, the film is not so softened during such heating, and thus the electric conductivity in a direction perpendicular to the surface of a resulting electroconductive polyimide film may not become so high.

The heating time may be any time sufficient for substantial completion of imidization and drying, and is not unequivocally defined, but is typically, appropriately set within about 1 to 600 seconds.

When the electroconductive polyimide used in the collector of the present invention is subjected to a heating step, the distribution of conductive particles in the electroconductive polyimide layer is changed, and the electric conductivity in a direction perpendicular to the surface is selectively increased, as described above. Thus, it is important to control the heating step.

The heating step may be carried out concurrently with a production step or may be carried out separately. For example, in solution casting, the above-described step of evaporating a solvent and advancing imidization can work as the heating step.

In melt casting, a step of melting a polyimide resin and extruding the resin from dies can work as the heating step. However, the polyimide resin in a molten state is excessively soft and may not achieve an intended electric conductivity in a direction perpendicular to the surface. In such a case, the heating step is preferably, separately provided.

The temperature in the heating step is preferably higher than a glass transition temperature of the polyimide resin in order to increase the electric conductivity in a direction perpendicular to the surface. Specifically, the temperature is preferably 50°C or more higher than the glass transition temperature and more preferably 100°C or more higher than the glass transition temperature. However, an excessively high heating temperature may cause the polyimide resin to be thermally decomposed or to become excessively soft to lose self-supporting properties, and thus a resulting film can have a poor appearance. Although the balance with treatment time is considered, the upper limit of the heating temperature is preferably equal to or lower than a temperature 200°C higher than a glass transition temperature of the polyimide resin. The heating system is not limited to particular systems and is exemplified by a hot wind system or a far-infrared system.

The thickness of the electroconductive polyimide film (layer) constituting the collector of the present invention can be appropriately adjusted by appropriately controlling the thickness of a coating on a substrate, the concentration of a polyamic acid, and the part by weight of a conductivity-imparting agent. The finally obtained electroconductive polyimide layer may have any thickness, but the thickness is preferably 1 to 100 μm, more preferably 5 to 100 μm, even more preferably 1.5 to 75 μm, most preferably 2 to 50 μm, and particularly preferably 5 to 50 μm. If the thickness is less than 1 μm, the film has a poor strength and may be difficult to handle. If the thickness is more than 100 μm, a battery including such a film has lower performance such as power density. In addition, such a thick electroconductive polyimide layer may have a larger resistance in the thickness direction to increase the internal resistance of a resulting battery, and is difficult to uniformly imidize and dry. Thus, mechanical characteristics may vary, or local defects such as foams may be readily caused.

In the electroconductive polyimide layer in the present invention, the value obtained by dividing a volume resistivity in a direction perpendicular to the surface by a volume resistivity in the surface direction is preferably more than 1 and not more than 10. When the ratio of volume resistivities in a direction perpendicular to the surface and in the surface direction falls within the range, the volume resistivity in the surface direction is comparatively high, whereas the volume resistivity in a direction perpendicular to the surface is comparatively low. When a battery includes such an electroconductive polyimide layer as the collector of a bipolar lithium ion secondary battery, the internal resistance of the battery is not increased, and an excellent power density can be achieved. In order to reduce the internal resistance of a battery and to achieve an excellent power density, the upper limit of the ratio of the volume resistivities in a direction perpendicular to the surface and in the surface direction is preferably 8 or less, more preferably 6 or less, even more preferably 5 or less, and particularly preferably 3 or less. The ratio of the volume resistivities can be adjusted by using the above-mentioned particular diamine component and the acid dianhydride component and by specifying the amounts used. The ratio of the volume resistivities can also be adjusted by appropriately selecting the blending ratio of material monomers so that the inflection point of storage elastic modulus in the dynamic viscoelastic measurement and the storage elastic modulus at a predetermined temperature fall within predetermined ranges. Here, "direction perpendicular to the surface" means the thickness direction of a film, and "surface direction" means the width direction and the length direction of a film, perpendicular to the direction perpendicular to the surface.

The collector for lithium ion secondary batteries of the present invention may further include other electroconductive layers in addition to the electroconductive polyimide layer. It is to be noted that it has a metal layer having a thickness of 0.01 to 2 μm on at least one side of the electroconductive polyimide layer. The metal layer enables an improvement in negative electrode potential durability of the collector and enables the suppression of a reduction in battery capacity.

The metal layer may be composed of any metal species, and the metal species is preferably at least one metal of gold, silver, copper, platinum, nickel, and chromium in terms of versatility, processability, and electric conductivity.

The metal layer can be formed by any industrially available known method. Specifically exemplified methods are metal vapor deposition, plating, thermal spraying, and coating of a metal nanoparticle solution.

Examples of the metal vapor deposition method include physical vapor deposition methods (PVD methods such as sputtering, vacuum deposition method, and ion plating) and chemical vapor deposition methods (CVD methods such as plasma CVD method). In particular, sputtering and vacuum deposition method are preferably employed because a uniform metal layer is easily obtained.

The sputtering is performed as follows: A material composed of a certain metal species that is intended to be deposited as a thin film (metal layer) is placed as a target in a vacuum chamber; then an accelerated noble gas element (sputtering gas, typically argon) that has been discharged and ionized by high voltage is allowed to collide against the target or an ion gun is used to allow sputtering gas ions to directly collide against the target, thereby sputtering the target atoms; and the target atoms sputtered from the target surface are deposited on a substrate (electroconductive polyimide layer), thereby forming a thin film. Examples of the sputtering system include direct current sputtering, high-frequency sputtering, magnetron sputtering, and ion beam sputtering in accordance with the manner ionizing the sputtering gas. The metal layer in the present invention may be formed by any system of the above sputtering methods.

The vacuum deposition method is performed as follows: In a vacuum container, a vapor deposition material that is intended to be deposited as a thin film is heated to be vaporized or sublimated, and is deposited on the surface of an electroconductive polyimide film as a substrate, thereby forming a thin film. Depending on a vapor deposition material and a type of the substrate, the material is heated by resistance heating, electron beam, high-frequency induction, laser, or a similar means.

The plating is exemplified by electroplating and electroless plating. The plating method can be appropriately selected depending on the conductivity of an electroconductive polyimide film. For example, for an electroconductive polyimide film having a high conductivity, electroplating is preferably selected to form a uniform metal layer in terms of cost efficiency and productivity.

The coating of a metal nanoparticle solution is performed as follows: A solution in which nanosized metal particles are dispersed in an organic solvent is applied onto an electroconductive polyimide film and dried; and as necessary, the nanoparticles are sintered together at a higher temperature, thereby forming a metal layer.

The particle size of nanoparticles is appropriately selected from several nanometers to several hundred nanometers. As necessary, a dispersant may be provided on the surface of particles in order to prevent the particles from aggregating together. The application onto an electroconductive polyimide film can also be appropriately performed by a conventionally known method.

The metal layer has a thickness of 0.01 to 2 $\mu$m and preferably 0.05 to 1 $\mu$m. If having a thickness less than the range, the metal layer may fail to uniformly cover the surface of an electroconductive polyimide layer and may cause degradation of the electroconductive polyimide layer as the underlayer in a negative electrode potential environment. If having a thickness more than the range, the metal layer has such a large weight that an increase in weight of a lamination film with another metal layer as described later is marked, and this can impair the advantageous effect of using the electroconductive polyimide film as the collector.

In the collector for lithium ion secondary batteries of the present invention, the thickness of the metal layer may be increased by additional electroplating. By further stacking the metal layer through electroplating, the metal layer obtains higher denseness and obtains higher durability in a negative electrode potential environment. As described above, for electroplating, an underlayer is required to have sufficient electric conductivity. In this case, a metal layer has been provided, and thus the electroplating can be satisfactory carried out.

The metal species for electroplating in order to further stack the metal layer is not limited to particular species and preferably contains at least one metal of gold, silver, copper, platinum, nickel, and chromium in terms of versatility, processability, and electric conductivity.

The thickness of the metal layer formed by the electroplating, in total with the thickness of an underlying metal layer, is preferably 0.1 to 5 $\mu$m and more preferably 0.1 to 2 $\mu$m. If having a thickness less than the range, the metal layer has insufficient durability in conditions where the metal layer side is placed in a negative electrode potential environment, and thus an electroconductive polyimide layer as the underlayer may be decomposed. If the metal layer has a thickness larger than the range, an increase in weight of a lamination film becomes large, and this can impair the advantageous effect of using the electroconductive polyimide film as the collector.

The collector for lithium ion secondary batteries of the present invention can have a removable film on the surface of the collector for batteries in order to prevent foreign substances from adhering to the collector surface or to maintain physical properties. The removable film is not limited to particular films and known films are usable. Examples of the film include PET films, polytetrafluoroethylene films, polyethylene films, and polypropylene films.

In order to improve adhesion and electrical contact with electrodes, the surface of the collector may be subjected to surface treatment. The surface treatment is not limited to particular treatments, and is exemplified by corona treatment, plasma treatment, and blast treatment.

The collector of the present invention can be used as the collector for bipolar lithium ion secondary batteries. The bipolar battery is characterized by forming a positive electrode on one side of a collector and a negative electrode on the other side and stacking them while interposing electrolyte layers.

The positive electrode and the negative electrode may have any structure, and known positive electrodes and negative electrodes are applicable. In the electrodes, a positive electrode active material is included for a positive electrode, and a negative electrode active material is included for a negative electrode. The positive electrode active material and the negative electrode active material can be appropriately selected depending on the type of a battery.

For example, for lithium secondary batteries, the positive electrode active material is exemplified by Li-Co composite oxides such as $LiCoO_2$, Li-Ni composite oxides such as $LiNiO_2$, Li-Mn composite oxides such as spinel $LiMn_2O_4$, and Li-Fe composite oxides such as $LiFeO_2$. Additional examples include phosphate compounds and sulfate compounds of transition metals and lithium, such as $LiFePO_4$; transition metal oxides and transition metal sulfides, such as $V_2O_5$, $MnO_2$, $TiS_2$, $MoS_2$, and $MoO_3$; and $PbO_2$, $AgO$, and $NiOOH$. In some cases, two or more positive electrode active materials may be used in combination.

The negative electrode active material is exemplified by carbon materials (carbon) such as crystalline carbon materials and amorphous carbon materials and metal materials including composite oxides of lithium and transition metals, such as $Li_4Ti_5O_{12}$. Specific examples of the material include natural graphite, artificial graphite, carbon black, active carbon, carbon fibers, coke, soft carbon, and hard carbon. In some cases, two or more negative electrode active materials may be used in combination.

The electrode may contain other components such as conductive auxiliary agents, ion-conducting polymers, and supporting electrolytes. Examples of the conductive auxiliary agent include acetylene black, carbon black, and graphite. When contained, the conductive auxiliary agent enables an increase in conductivity of electrons generated from the electrode to improve the battery performance. Examples of the ion-conducting polymer include polyethylene oxide (PEO) and polypropylene oxide (PPO). The supporting electrolyte can be selected depending on the type of a battery. For lithium batteries, $LiBF_4$, $LiPF_6$, $Li(SO_2CF_3)_2N$, and $LiN(SO_2C_2F_5)_2$ are exemplified.

The amounts of constituent materials of an electrode, such as an active material, a lithium salt, and a conductive auxiliary agent are preferably set in consideration of an intended purpose (for example, focusing on output power or focusing on energy) of a battery and ionic conductivity.

A single active material forms a brittle film and cannot form an electrode having sufficient strength for use, and thus a binder resin is usually added to achieve a sufficient strength. Examples of the polymer used as the binder resin include PEO, PPO, polyvinylidene fluoride (PVDF), polyvinylidene fluoride-hexafluoropropylene copolymers (PVDF-HFP), polyacrylonitrile (PAN), polymethyl acrylate (PMA), and polymethyl methacrylate (PMMA). Among them, PVDF is typically used.

The electrolyte layer may be in any of a liquid phase, a gel phase, and a solid phase. The solvent in the electrolyte layer preferably includes cyclic aprotic solvents and/or linear aprotic solvents. Examples of the cyclic aprotic solvent include cyclic carbonates, cyclic esters, cyclic sulfones, and cyclic ethers. Examples of the linear aprotic solvent include linear carbonates, linear carboxylic acid esters, and linear ethers. In addition to the above solvents, a solvent commonly used as the solvent in nonaqueous electrolytes, such as acetonitrile can also be used. More specifically, dimethyl carbonate, methyl ethyl carbonate, diethyl carbonate, dipropyl carbonate, methyl propyl carbonate, ethylene carbonate, propylene carbonate, butylene carbonate, $\gamma$-butyrolactone, 1,2-dimethoxyethane, sulfolane, dioxolane, and methyl propionate are usable, for example. These solvents may be used singly or as a mixture of two or more of them. In terms of solubility of the supporting electrolyte described later and high conductivity of lithium ions, a mixture of two or more solvents is preferably used.

When a gel polymer electrolyte layer is used as the electrolyte, the electrolyte has no flowability and is prevented from flowing out into a collector, and thus the interlaminar ionic conductivity can be blocked. Examples of the host polymer of the gel electrolyte include PEO, PPO, polyvinylidene fluoride (PVDF), polyvinylidene fluoride-hexafluoropropylene copolymers (PVDF-HFP), polyacrylonitrile (PAN), polymethyl acrylate (PMA), and polymethyl methacrylate (PMMA). As a plasticizer, an electrolytic solution commonly used in lithium ion batteries can be used.

Also when an all-solid electrolyte layer is used as the electrolyte, the electrolyte has no flowability and is prevented from flowing out into a collector, and thus the interlaminar ionic conductivity can be blocked.

The gel polymer electrolyte is prepared by adding an electrolytic solution commonly used in lithium ion batteries to an all-solid polymer electrolyte such as PEO and PPO. Alternatively, the gel polymer electrolyte is prepared by allowing the skeleton of a polymer having no lithium ion conductivity, such as PVDF, PAN, and PMMA, to hold an electrolytic solution. The gel polymer electrolyte may contain the polymer and the electrolytic solution at any ratio. When an electrolyte containing a polymer at a ratio of 100% is an all-solid polymer electrolyte, and an electrolyte containing an electrolytic solution at a ratio of 100% is a liquid electrolyte, all the intermediates are included in the concept of the gel polymer electrolyte. The all-solid electrolyte includes all the electrolytes having lithium ion conductivity, including polymers and inorganic solids.

The electrolyte layer preferably contains a supporting electrolyte in order to maintain ionic conductivity. For lithium secondary batteries, the supporting electrolyte may be, for example, $LiBF_4$, $LiPF_6$, $LiN(SO_2CFs)_2$, $LiN(SO_2C_2F_5)_2$, and mixtures thereof, but is not limited to them. Polyalkylene oxide polymers such as PEO and PPO can sufficiently dissolve lithium salts such as $LiBF_4$, $LiPF_6$, $LiN(SO_2CF_3)_2$, and $LiN(SO_2C_2F_5)_2$, as described above. When a cross-linked structure is formed, excellent mechanical strengths are achieved.

Examples

Effects of the present invention will be described in further detail with reference to examples and comparative examples, but the present invention is not limited to them. Various changes, modifications, and alterations can be made by a person skilled in the art without departing from the scope of the invention.

The inflection points (glass transition temperatures) of storage elastic modulus, the amounts of change in storage elastic modulus, the ratios of the volume resistivities in the direction perpendicular to a surface and in a surface direction, the solvent barrier properties to electrolytic solutions, the durabilities against positive electrode potential, and the durabilities against negative electrode potential of polyimide films obtained in synthesis examples, examples, and comparative examples were determined and evaluated by the following methods.

(Inflection Point of Storage Elastic Modulus)

The inflection point (glass transition temperature) of storage elastic modulus was determined with DMS6100 manufactured by SII NanoTechnology Inc. The measurement was performed along the machine direction (MD) of a polyimide film obtained.

* Sample measurement range: a width of 9 mm, a distance between grippers of 20 mm
* Measurement temperature range: 0 to 400°C
* Temperature increase rate: 3°C/min
* Strain amplitude: 10 $\mu$m
* Measurement frequency: 1, 5, 10 Hz
* Minimum tension/compression force: 100 mN
* Tension/compression gain: 1.5
* Initial value of force amplitude: 100 mN

(Amount of Change in Storage Elastic Modulus)

The storage elastic modulus was determined as follows: After the inflection point (glass transition temperature) of storage elastic modulus was determined as above, the storage elastic modulus (A1) at a temperature 20°C lower than the glass transition temperature and the storage elastic modulus (A2) at a temperature 20°C higher than the glass transition temperature were read, from the measurement data.

(Ratio of Volume Resistivities in Direction Perpendicular to Surface and in Surface Direction)

The obtained electroconductive film was cut out in a 15-mm square. On a 10-mm square region in the center of each side of the cutout film, a gold thin film was formed by sputtering. With each gold thin film, a copper foil was brought into close contact by a pressure of 1 MPa. An electric current I was applied across two copper foils, and an electric potential V was measured. The value V/I was regarded as an electrical resistance per unit area in the direction perpendicular to the surface. The electrical resistance was converted into a volume resistivity.

With LORESTA-GP (MCP-T610, manufactured by Mitsubishi Chemical Analytech Co., Ltd.), a four-point probe was pushed onto the surface of the electroconductive film, and the surface resistivity in the surface direction was measured, and was converted into a volume resistivity.

The volume resistivity in the direction perpendicular to the surface determined by the measurement method was divided by the volume resistivity in the surface direction determined by the measurement method, giving the ratio of the volume resistivities.

(Solvent Barrier Properties to Electrolytic Solution)

Each electroconductive polyimide film produced in examples and comparative examples was cut out in a circle having a diameter of 8 cm, giving a sample film.

For the solvent barrier property test, the following jigs (the parenthesized symbols correspond to the symbols in Fig. 1) were used.

Teflon block (1): a cylindrical Teflon block ("Teflon" is a registered trademark) having a diameter of 10 cm and a height of 2 cm and including a circular groove having a diameter of 4 cm and a depth of 1 cm on one side.

O-ring (2): an O-ring having an inner diameter of 4.44 cm and a thickness of 0.31 cm.

Film holder (4): a film holder made of SUS304 stainless steel and having an inner diameter of 4 cm, an outer diameter of 10 cm, and a thickness of 0.2 mm.

The solvent permeation amount was determined by the following procedure.

In the groove of the Teflon block (1), 0.5 g of a carbonate solvent (5) was poured. On the Teflon block, the O-ring (2), a sample film (3), and the film holder (4) were stacked in this order. A pressure was applied between the film holder (4) and the Teflon block (1) so as not to leak the carbonate solvent (5) from between the O-ring (2), the sample film (3), and the Teflon block (1). To evaluate a sample film (3) having a metal layer on an electroconductive polyimide film, the sample film (3) was arranged in such a manner that the side without the metal layer came in contact with the carbonate solvent (5). The whole was turned over so as to dispose the film holder (4) at the bottom (Fig. 1), and was weighed. Then, the whole was left in the condition shown in Fig. 1 in a dry air atmosphere at 25°C for 2 weeks, and then was weighed again. The difference in weight was regarded as the solvent permeation amount. A film having a solvent permeation amount of 10 mg or less has excellent barrier properties to the solvent in an electrolytic solution. In the measurement, the area of the film in contact with the solvent is 16.6 cm$^2$.

(Measurement of Durability against Positive Electrode Potential)

The electrode cell used was a flat cell (Hohsen Corporation). The counter electrode used was a cylindrical Li foil having a diameter of 15 mm and a thickness of 0.5 mm; the separator used was a Celgard 2500 (made of polypropylene, Hohsen Corporation) cut out in a circle having a diameter of 19 mm; the work electrode used was an electroconductive film cut out in a circle having a diameter of 30 mm; and the electrolytic solution used was 1 mol/L LiPF$_6$ in a mixed solution of ethylene carbonate and diethyl carbonate (a volume ratio of 3:7, trade name: LBG-94913, Kishida Chemical Co., Ltd.).

The cell was prepared by the following procedure under an argon atmosphere. In the cell, the counter electrode, the separator impregnated with the electrolytic solution, and the work electrode were stacked in this order. At this time, the counter electrode and the separator were in contact only in a circular area having a diameter of 15 mm, while the work electrode and the separator were in contact only in a circular area having a diameter of 16 mm, and the work electrode was not in contact with the counter electrode. Next, to the counter electrode and the work electrode, SUS304 stainless steel electrodes (electrode A and electrode B, respectively) were connected, and the cell was sealed so as not to pass gas.

The measurement was performed by the following procedure. The cell was placed in a constant temperature chamber at 55°C and left for 1 hour. The electrodes A and B in the cell were connected to Multistat 1470E manufactured by Solartron. Subsequently, a constant potential was maintained so that the electrode A had an electric potential of 4.2 V relative to the electrode B, then an electric current a after 1 minute and an electric current b after 1 day were measured, and the ratio b/a was calculated. A film having a ratio b/a of 1/2 or less is regarded to have durability against positive electrode potential.

(Measurement of Durability against Negative Electrode Potential)

The structure and the production procedure of the cell were the same as in the measurement method of durability against positive electrode potential except that the lamination film was arranged in such a manner that the face with the metal layer of the lamination film as the work electrode came in contact with the separator.

The measurement was performed by the following procedure. The cell was placed in a constant temperature chamber at 55°C and left for 1 hour. The electrodes A and B in the cell were connected to Multistat 1470E manufactured by Solartron. Subsequently, while the difference in electric potential between the electrode A and the electrode B was observed, a constant current of 20.1 µA was applied from the electrode B to the electrode A. At this time, the time until the difference in electric potential between the electrode A and the electrode B reached 5 mV was determined. The time of a copper foil (20-µm thickness) commonly used as the collector in lithium ion batteries until the difference reached 5 mV is regarded as 1, and the time of a measurement sample until the difference reached 5 mV is compared with that of the copper foil, giving a time to reach negative electrode potential relative to a copper foil. When the time to reach negative electrode potential relative to a copper foil is 10 or less, the durability against negative electrode potential is excellent. As the time to reach negative electrode potential relative to a copper foil is closer to 1, the durability against negative electrode potential is higher.

(Example 1 (reference))

In a separable flask having a volume of 2 L, 812.6 g of dimethylformamide (DMF) and 63.6 g of p-phenylenediamine (p-PDA) were placed. While the mixture was stirred under a nitrogen atmosphere, 81.3 g of 3,3',4,4'-biphenyltetracarboxylic dianhydride (s-BPDA) was slowly added. After the s-BPDA was completely added, the whole was heated to 40°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mmϕ zirconia beads in a bead mill having a volume of 0.6 L at a blade rotation speed of 10 m/sec.

After the dispersion treatment, the treated solution was placed in a separable flask, and a dispersion liquid of s-BPDA in DMF (7.2% by weight) was slowly added while the mixture was stirred under a nitrogen atmosphere. The addition and stirring were stopped when the viscosity reached 100 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

On an aluminum foil, 100 g of the carbon-dispersed polyamic acid solution was cast so as to give a final thickness of 25 μm and a width of 40 cm, and dried at 90°C for 600 seconds, giving a self-supporting film. The self-supporting film was released from the aluminum foil, then fixed to pins, and dried at 150°C for 300 seconds, at 250°C for 300 seconds, at 350°C for 300 seconds, and at 400°C for 300 seconds, giving an electroconductive polyimide film.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 μm so as to give a final thickness of 20 μm, and was dried at 80°C for 5 minutes. The dried self-supporting film was released from the PET film, then fixed to a metal pin frame, and dried at 120°C for 3 minutes, at 200°C for 3 minutes, at 300°C for 3 minutes, and at 400°C for 3 minutes, giving a polyimide film for storage elastic modulus measurement.

(Example 2 (reference))

In a separable flask having a volume of 2 L, 812.6 g of DMF, 17.5 g of p-PDA, and 32.5 g of 4,4'-oxydianiline (ODA) were placed. While the mixture was stirred under a nitrogen atmosphere, 47.7 g of s-BPDA and 49.1 g of 3,3',4,4'-benzophenonetetracarboxylic dianhydride (BTDA) were slowly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mmϕ zirconia beads in a bead mill having a volume of 0.6 L at a blade rotation speed of 10 m/sec.

After the dispersion treatment, the treated solution was placed in a separable flask, and a dispersion liquid of BTDA in DMF (7.2% by weight) was slowly added while the mixture was stirred under a nitrogen atmosphere. The addition and stirring were stopped when the viscosity reached 200 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

To 100 g of the carbon-dispersed polyamic acid solution, an imidization accelerator composed of 9.3 g of isoquinoline, 9.7 g of acetic anhydride, and 21 g of DMF was added, and the whole was uniformly mixed. The resulting mixture was cast on an aluminum foil so as to give a final thickness of 25 μm and a width of 40 cm, and dried at 120°C for 216 seconds, giving a self-supporting film. The self-supporting film was released from the aluminum foil, then fixed to pins, and dried at 250°C for 200 seconds and subsequently at 400°C for 64 seconds, giving an electroconductive polyimide film.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 μm so as to give a final thickness of 20 μm, and was dried at 80°C for 5 minutes. The dried self-supporting film was released from the PET film, then fixed to a metal pin frame, and dried at 120°C for 3 minutes, at 180°C for 3 minutes, at 250°C for 3 minutes, and at 350°C for 3 minutes, giving a polyimide film for storage elastic modulus measurement.

(Example 3 (reference))

In a separable flask having a volume of 2 L, 819.1 g of DMF, 19.8 g of p-PDA, and 36.6 g of ODA were placed. While the mixture was stirred under a nitrogen atmosphere, 53.8 g of s-BPDA and 37.5 g of pyromellitic dianhydride (PMDA) were slowly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mmφ zirconia beads in a bead mill having a volume of 0.6 L at a blade rotation speed of 10 m/sec.

After the dispersion treatment, the treated solution was placed in a separable flask, and a dispersion liquid of PMDA in DMF (7.2% by weight) was slowly added while the mixture was stirred under a nitrogen atmosphere. The addition and stirring were stopped when the viscosity reached 200 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

The carbon-dispersed polyamic acid solution obtained by the method was used to give an electroconductive polyimide film in the same manner as in Example 2.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 μm so as to give a final thickness of 20 μm, and was dried at 80°C for 5 minutes. The dried self-supporting film was released from the PET film, then fixed to a metal pin frame, and dried at 120°C for 3 minutes, at 180°C for 3 minutes, at 250°C for 3 minutes, and at 350°C for 3 minutes, giving a polyimide film for storage elastic modulus measurement.

(Example 4 (reference))

In a separable flask having a volume of 2 L, 829.4 g of DMF and 98 g of 2,2-bis[4-(4-aminophenoxy)phenyl] propane (BAPP) were placed. While the mixture was stirred under a nitrogen atmosphere, 50.5 g of PMDA was slowly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mmφ zirconia beads in a bead mill having a volume of 0.6 L at a blade rotation speed of 10 m/sec.

After the dispersion treatment, the treated solution was placed in a separable flask, and a dispersion liquid of PMDA in DMF (7.2% by weight) was slowly added while the mixture was stirred under a nitrogen atmosphere. The addition and stirring were stopped when the viscosity reached 200 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

The carbon-dispersed polyamic acid solution obtained by the method was used to give an electroconductive polyimide film in the same manner as in Example 2.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 μm so as to give a final thickness of 20 μm, and was dried at 80°C for 5 minutes. The dried self-supporting film was released from the PET film, then fixed to a metal pin frame, and dried at 120°C for 3 minutes, at 180°C for 3 minutes, at 250°C for 3 minutes, and at 350°C for 3 minutes, giving a polyimide film for storage elastic modulus measurement.

(Example 5 (reference))

In a separable flask having a volume of 2 L, 829.4 g of DMF and 52.7 g of ODA were placed. While the mixture was stirred under a nitrogen atmosphere, 68.5 g of 4,4'-[isopropylidenebis(p-phenyleneoxy)]diphthalic dianhydride (BPADA) and 27 g of PMDA were slowly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mmφ zirconia beads in a bead mill having a volume of 0.6 L at a blade rotation speed of 10 m/sec.

After the dispersion treatment, the treated solution was placed in a separable flask, and a dispersion liquid of PMDA in DMF (7.2% by weight) was slowly added while the mixture was stirred under a nitrogen atmosphere. The addition and stirring were stopped when the viscosity reached 200 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

The carbon-dispersed polyamic acid solution obtained by the method was used to give an electroconductive polyimide film in the same manner as in Example 2.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The dried self-supporting film was released from the PET film, then fixed to a metal pin frame, and dried at 120°C for 3 minutes, at 180°C for 3 minutes, at 250°C for 3 minutes, and at 350°C for 3 minutes, giving a polyimide film for storage elastic modulus measurement.

(Example 6 (reference))

In a separable flask having a volume of 2 L, 820.4 g of DMF and 71.8 g of ODA were placed. While the mixture was stirred under a nitrogen atmosphere, 75.9 g of PMDA was slowly added. After the PMDA was completely added, the whole was adjusted to 20°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mm$\phi$ zirconia beads in a bead mill having a volume of 0.6 L at a blade rotation speed of 10 m/sec.

After the dispersion treatment, the treated solution was placed in a separable flask, and a dispersion liquid of PMDA in DMF (7.2% by weight) was slowly added while the mixture was stirred under a nitrogen atmosphere. The addition and stirring were stopped when the viscosity reached 100 Pa·s, giving a polyamic acid solution in which the conductivity-imparting agent was dispersed (carbon-dispersed polyamic acid solution).

The carbon-dispersed polyamic acid solution obtained by the procedure contained 10 parts by weight of Ketjenblack relative to 100 parts by weight of the polyamic acid.

On an aluminum foil, 100 g of the carbon-dispersed polyamic acid solution was cast so as to give a final thickness of 25 $\mu$m and a width of 40 cm, and dried at 90°C for 600 seconds, giving a self-supporting film. The self-supporting film was released from the aluminum foil, then fixed to pins, and dried at 150°C for 300 seconds, at 250°C for 300 seconds, at 350°C for 300 seconds, and at 400°C for 300 seconds, giving an electroconductive polyimide film.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The dried self-supporting film was released from the PET film, then fixed to a metal pin frame, and dried at 120°C for 3 minutes, at 200°C for 3 minutes, at 300°C for 3 minutes, and at 400°C for 3 minutes, giving a polyimide film for storage elastic modulus measurement.

(Comparative Example 1)

In a separable flask having a volume of 2 L, 810.0 g of DMF and 45.1 g of siloxane diamine (KF8010 manufactured by Shin-Etsu Chemical Co., Ltd.) were placed. While the mixture was stirred under a nitrogen atmosphere, 101.7 g of 2,2-bis(4-hydroxyphenyl)propanedibenzoate-3,3',4,4'-tetracarboxylic dianhydride (ESDA) was instantly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mm$\phi$ zirconia beads in a bead mill having a volume of 0.6 L at a blade rotation speed of 10 m/sec.

After the dispersion treatment, the treated solution was placed in a separable flask, and a dispersion liquid of ESDA in DMF (7.2% by weight) was slowly added while the mixture was stirred under a nitrogen atmosphere. The addition and stirring were stopped when the viscosity reached 50 Pa·s, giving a polyamic acid solution in which the conductivity-imparting agent was dispersed.

The polyamic acid solution obtained by the procedure contained 10 parts by weight of Ketjenblack relative to 100 parts by weight of the polyamic acid.

On an aluminum foil, 100 g of the carbon-dispersed polyamic acid solution was cast so as to give a final thickness of 25 $\mu$m and a width of 40 cm, and dried at 80°C for 600 seconds, giving a self-supporting film. The self-supporting film was released from the aluminum foil, then fixed to pins, and dried at 150°C for 300 seconds, at 200°C for 300 seconds, and at 250°C for 300 seconds, giving an electroconductive polyimide film.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The film was further dried at 120°C for 5 minutes and at 150°C for 5 minutes. The dried film was then released from the PET film, giving a polyimide film for storage elastic modulus measurement.

(Comparative Example 2)

In a separable flask having a volume of 2 L, 819.1 g of DMF and 68.6 g of siloxane diamine (KF8010 manufactured by Shin-Etsu Chemical Co., Ltd.) were placed. While the mixture was stirred under a nitrogen atmosphere, 79.0 g of s-BPDA was instantly added. After the raw materials were completely added, the whole was adjusted to 30°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.
Next, the solution was dispersed with 0.8-mm$\phi$ zirconia beads in a bead mill having a volume of 0.6 L at a blade rotation speed of 10 m/sec.
After the dispersion treatment, the treated solution was placed in a separable flask, and a dispersion liquid of s-BPDA in DMF (7.2% by weight) was slowly added while the mixture was stirred under a nitrogen atmosphere. The addition and stirring were stopped when the viscosity reached 50 Pa·s, giving a polyamic acid solution in which the conductivity-imparting agent was dispersed.
The polyamic acid solution obtained by the procedure contained 10 parts by weight of Ketjenblack relative to 100 parts by weight of the polyamic acid.
The polyamic acid solution obtained by the method was used to give an electroconductive polyimide film in the same manner as in Comparative Example 1.
Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The film was further dried at 120°C for 5 minutes and at 150°C for 5 minutes. The dried film was then released from the PET film, giving a polyimide film for storage elastic modulus measurement.

(Comparative Example 3)

In a separable flask having a volume of 2 L, 821.6 g of DMF and 75.0 g of BAPP were placed. While the mixture was stirred under a nitrogen atmosphere, 72.7 g of 3,3',4,4'-ethylene glycol dibenzoate tetracarboxylic dianhydride (TMEG) was instantly added. After the raw materials were completely added, the whole was adjusted to 25°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.
Next, the solution was dispersed with 0.8-mm$\phi$ zirconia beads in a bead mill having a volume of 0.6 L at a blade rotation speed of 10 m/sec.
After the dispersion treatment, the treated solution was placed in a separable flask, and a dispersion liquid of TMEG in DMF (7.2% by weight) was slowly added while the mixture was stirred under a nitrogen atmosphere. The addition and stirring were stopped when the viscosity reached 50 Pa·s, giving a polyamic acid solution in which the conductivity-imparting agent was dispersed.
The polyamic acid solution obtained by the procedure contained 10 parts by weight of Ketjenblack relative to 100 parts by weight of the polyamic acid.
The polyamic acid solution obtained by the method was used to give an electroconductive polyimide film in the same manner as in Comparative Example 1 except that the maximum temperature was changed from 250°C to 300°C.
Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The dried self-supporting film was released from the PET film, then fixed to a metal pin frame, and dried at 120°C for 3 minutes, at 150°C for 3 minutes, at 200°C for 3 minutes, and at 250°C for 3 minutes, giving a polyimide film for storage elastic modulus measurement.

(Comparative Example 4)

In a separable flask having a volume of 2 L, 822.9 g of DMF and 79.6 g of 1,2-bis[2-(4-aminophenoxy)ethoxy] ethane (DA3EG) were placed. While the mixture was stirred under a nitrogen atmosphere, 68.3 g of s-BPDA was slowly added. After the raw materials were completely added, the whole was adjusted to 30°C, and the stirring was continued until the raw materials were completely dissolved. Subsequently, 15 g of Ketjenblack (EC600JD, manufactured by Lion Corporation) was added as a conductivity-imparting agent, and the whole was stirred for 30 minutes.

Next, the solution was dispersed with 0.8-mm$\phi$ zirconia beads in a bead mill having a volume of 0.6 L at a blade rotation speed of 10 m/sec.

After the dispersion treatment, the treated solution was placed in a separable flask, and a dispersion liquid of s-BPDA in DMF (7.2% by weight) was slowly added while the mixture was stirred under a nitrogen atmosphere. The addition and stirring were stopped when the viscosity reached 50 Pa·s, giving a polyamic acid solution in which the conductivity-imparting agent was dispersed.

The polyamic acid solution obtained by the procedure contained 10 parts by weight of Ketjenblack relative to 100 parts by weight of the polyamic acid.

The polyamic acid solution obtained by the method was used to give an electroconductive polyimide film in the same manner as in Comparative Example 3.

Separately, the same procedure as the above was carried out except that neither addition of Ketjenblack nor dispersion treatment was carried out, giving a carbon-undispersed polyamic acid solution. The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The dried self-supporting film was released from the PET film, then fixed to a metal pin frame, and dried at 120°C for 3 minutes, at 150°C for 3 minutes, at 200°C for 3 minutes, and at 250°C for 3 minutes, giving a polyimide film for storage elastic modulus measurement.

The inflection points of storage elastic modulus and the amounts of change in storage elastic modulus of the polyimide films obtained in Examples 1 to 6 and Comparative Examples 1 to 4 were measured, and the ratios of the volume resistivities in a direction perpendicular to the surface and in the surface direction, the solvent barrier properties to an electrolytic solution, and the durabilities against positive electrode potential of the electroconductive polyimide films were determined. Table 1 shows the results.

[Table 1]

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Tetracarboxylic dianhydride (molar ratio) | s-BPDA | 100 | 50 | 50 | | | | | 100 | | 100 |
| | BTDA | | 50 | | | | | | | | |
| | PMDA | | | 50 | 100 | 50 | 100 | | | | |
| | BPADA | | | | | 50 | | | | | |
| | ESDA | | | | | | | 100 | | | |
| | TMEG | | | | | | | | | 100 | |
| Diamine (molar ratio) | p-PDA | 100 | 50 | 50 | | | | | | | |
| | ODA | | 50 | 50 | | 100 | 100 | | | | |
| | BAPP | | | | 100 | | | | | 100 | |
| | Siloxane diamine | | | | | | | 100 | 100 | | |
| | DA3EG | | | | | | | | | | 100 |
| Polyimide film | | | | | | | | | | | |
| Inflection point of storage elastic modulus (°C) | | None | 240 | 310 | 280 | 250 | None | 30 | 80 | 180 | 170 |
| Amount of change in storage elastic modulus | | - | 8.0 | 45.0 | 15.0 | 20.0 | - | 0.5 | 1.5 | 3.0 | 4.5 |
| Electroconductive polyimide film | | | | | | | | | | | |
| Ratio of volume resistivities in direction perpendicular to surface and in surface direction | | 4.6 | 6.4 | 8.3 | 5.9 | 8.3 | 4.9 | 4.6 | 5.1 | 4.9 | 4.6 |
| Solvent barrier properties to electrolytic solution (mg) | | 0.7 | 0.8 | 0.7 | 0.9 | 1.2 | 0.8 | 22.4 | 28.0 | 12.8 | 26.6 |
| Durability against positive electrode potential (b/a) | | 0.02 | 0.02 | 0.02 | 0.02 | 0.02 | 0.02 | 0.04 | 0.04 | 0.02 | 0.02 |

EP 2 924 786 B1

Table 1 indicates that the electroconductive polyimide films obtained in Examples 1 to 6 had good ratios of the volume resistivities in a direction perpendicular to the surface and in the surface direction, good solvent barrier properties, and good durabilities against positive electrode potential, whereas the electroconductive polyimide films obtained in Comparative Examples 1 to 4 had lower solvent barrier properties.

(Example 7)

On one side of the electroconductive polyimide film obtained in Example 1, a copper thin layer having a thickness of 500 nm was formed by using a sputtering system (product name: NSP-6, manufactured by Showa Shinku Co., Ltd.) and a copper (elementary substance) target at a sputtering gas pressure of 13.5 Pa (argon gas) and an output power of 900 W, giving a lamination film.

(Example 8)

A lamination film was obtained in the same manner as in Example 7 except that the electroconductive polyimide film obtained in Example 2 was used.

(Example 9)

A lamination film was obtained in the same manner as in Example 7 except that a vacuum deposition system (product name: EBH-6, manufactured by ULVAC, Inc.) was used in place of the sputtering system to form a copper thin layer.

(Example 10)

A lamination film was obtained in the same manner as in Example 9 except that the electroconductive polyimide film obtained in Example 2 was used.

(Example 11)

A lamination film was obtained in the same manner as in Example 7 except that the copper thin layer had a thickness of 200 nm. On the copper thin layer, copper sulfate electroplating was further performed, giving a lamination film including a copper thin layer having a thickness of 500 nm.

(Example 12)

A lamination film was obtained in the same manner as in Example 8 except that the copper thin layer had a thickness of 200 nm. Subsequently, the same plating as in Example 11 was performed, giving a lamination film.

(Example 13)

On one side of the electroconductive polyimide film obtained in Example 1, a dispersion liquid of copper nanoparticles having an average particle size of 5 nm was applied with a bar coater so as to give a final thickness of 500 nm, and the coating was dried at 150°C for 5 minutes. Subsequently, the coating was heated under a nitrogen atmosphere at 300°C for 1 hour, giving a lamination film.

(Example 14)

On one side of the electroconductive polyimide film obtained in Example 1, a dispersion liquid of copper nanoparticles having an average particle size of 5 nm was applied with a bar coater so as to give a final thickness of 100 nm, and the coating was dried at 150°C for 5 minutes. Subsequently, the coating was heated under a nitrogen atmosphere at 300°C for 1 hour, giving a copper thin layer. On the copper thin layer, copper sulfate electroplating was further performed, giving a lamination film including a copper thin layer having a thickness of 400 nm.

(Comparative Example 5)

Polyisobutylene (EP400, manufactured by Kaneka Corporation), Ketjenblack (EC600JD, manufactured by Lion Corporation), and toluene were prepared so as to give a weight ratio of 9.07:1:30 and were dispersed with 5-mmφ zirconia balls in a ball mill. The dispersion conditions were a batch of 250 g, a zirconia ball weight of 500 g, a rotation rate of 600 rpm, and a rotation time of 30 minutes. To the mixture, 0.93 equivalent of a hardener (a compound having about 5.5 hydrosilyl groups on average per molecule, prepared by adding 2 equivalents of an $\alpha$-olefin relative to the total hydrosilyl group amount to a methylhydrogen silicone having 7.5 (-Si-O-) repeating units on average in the presence of a platinum catalyst; the compound had a Si-H group content of 6 mmol/g) on the basis of the above weight ratio, 0.017 equivalent of a retarder (Surfynol 61, manufactured by Nissin Chemical Industry Co., Ltd.) on the basis of the above weight ratio, and 0.012 equivalent of a curing catalyst (Pt-VTS-3.0X, manufactured by Umicore Japan) on the basis of the above weight ratio were added. The whole was stirred and degassed, giving a dispersion liquid.

The obtained dispersion liquid was cast on a Teflon (registered trademark) by using a wire bar (Rod No. 30, a coating speed of 1 cm/sec) so as to give a final thickness of 20 $\mu$m in total, and was dried and hardened at 150°C for 10 minutes. The Teflon was then removed by peeling, giving an electroconductive film. The solvent barrier properties to an electrolytic solution of the electroconductive film was determined to be 4,000 mg.

A lamination film was obtained in the same manner as in Example 7 except that the electroconductive film obtained was used.

(Comparative Example 6)

Pellets of a polypropylene resin (trade name: LEOPOUND, grade F1020, manufactured by Lion Corporation) containing carbon black were used to give an electroconductive film having a thickness of about 90 $\mu$m by heat press (160°C). The solvent barrier properties to an electrolytic solution of the electroconductive film was determined to be 420 mg.

A lamination film was obtained in the same manner as in Example 7 except that the electroconductive film obtained was used.

(Comparative Example 7)

Butyl rubber (IIR365, manufactured by Japan Butyl Co., Ltd.), Ketjenblack (EC600JD, manufactured by Lion Corporation), and toluene were prepared so as to give a weight ratio of 10:1:30 and were dispersed with 5-mm$\phi$ zirconia balls in a ball mill. The dispersion conditions were a weight of the mixture prepared at the ratio of 250 g, a zirconia ball weight of 500 g, a rotation rate of 600 rpm, and a rotation time of 30 minutes. The mixture was then degassed, giving a dispersion liquid.

The obtained dispersion liquid was used to give an electroconductive film in the same manner as in Comparative Example 5. The solvent barrier properties to an electrolytic solution of the electroconductive film was determined to be 3,500 mg.

A lamination film was obtained in the same manner as in Example 7 except that the electroconductive film obtained was used.

(Comparative Example 8)

The electroconductive film obtained in the same manner as in Comparative Example 5 was used and a metal layer was formed in the same manner as in Example 11, giving a lamination film.

The solvent barrier properties to an electrolytic solution and the durabilities against negative electrode potential of the lamination films obtained in Examples 7 to 14 and Comparative Examples 5 to 8 were determined. Table 2 shows the results.

[Table 2]

| | Example 7 | Example 8 | Example 9 | Example 10 | Example 11 | Example 12 | Example 13 | Example 14 | Comparative Example 5 | Comparative Example 6 | Comparative Example 7 | Comparative Example 8 |
|---|---|---|---|---|---|---|---|---|---|---|---|---|
| Solvent barrier properties to electrolytic solution (mg) | 0.3 | 0.2 | 0.3 | 0.3 | 0.2 | 0.2 | 0.4 | 0.2 | 500 | 200 | 500 | 500 |
| Durability against negative electrode potential | 2 | 2 | 2 | 2 | 2 | 2 | 2 | 2 | 4 | 2 | 18 | 4 |

EP 2 924 786 B1

Table 2 indicates that the lamination films of Examples 7 to 14, which included the electroconductive polyimide film of the present invention having excellent solvent barrier properties to an electrolytic solution as the substrate, had much higher solvent barrier properties and excellent durabilities against negative electrode potential. In contrast, the lamination films of Comparative Examples 5 to 8, which included a resin having poor solvent barrier properties to an electrolytic solution, had poor solvent barrier properties even having a metal layer. This is supposed to be because an electrolytic solution infiltrated from the side without the metal layer swells a film, the stress caused by the swelling generates cracks and other defects in the metal layer, and the electrolytic solution evaporates through the cracks and other defects.

The results of Examples 1 to 14 and Comparative Examples 1 to 8 reveal that the collector of the present invention is useful as the collector for bipolar lithium ion secondary batteries.

(Synthesis Example 1)

In a stainless steel vessel having a volume of 500 liters, 243.6 kg of N,N-dimethylformamide (organic solvent, hereinafter called "DMF") was poured, then 14.6 kg of 4,4'-oxydianiline (hereinafter called "ODA"), and 2.0 kg of p-phenylenediamine (hereinafter called "PDA") were added, and the whole was stirred. The dissolution of the raw materials added was visually confirmed, then 10.7 kg of 3,3',4,4'-biphenyltetracarboxylic dianhydride (hereinafter called "BPDA") and 16.8 kg of 3,3',4,4'-benzophenonetetracarboxylic dianhydride (hereinafter called "BTDA") were added to the solution, and the stirring was continued. After the stirring for 30 minutes, the dissolution of the raw materials was visually confirmed, and a solution containing 11.4 kg of DMF and 0.9 kg of BTDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was diluted with DMF so as to give a solid content concentration of 10% by weight. The diluted solution was cast on a PET film (LUMIRROR, manufactured by Toray Industries Inc.) having a thickness of 125 μm so as to give a final thickness of 20 μm, and was dried at 80°C for 5 minutes. The dried self-supporting film was released from the PET film, then fixed to a metal pin frame, and dried at 120°C for 3 minutes, at 180°C for 3 minutes, at 250°C for 3 minutes, and at 350°C for 3 minutes, giving a polyimide film.

(Synthesis Example 2)

In a stainless steel vessel having a volume of 500 liters, 247.3 kg of DMF was poured, then 18.4 kg of ODA were added, and the whole was stirred. The dissolution of the raw materials added was visually confirmed, then 10.8 kg of BPDA, 11.8 kg of BTDA, and 3.4 kg of pyromellitic dianhydride (hereinafter called "PMDA") were added to the solution, and the stirring was continued. After the stirring for 30 minutes, the dissolution of the raw materials was visually confirmed, and a solution containing 7.7 kg of DMF and 0.6 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 3)

In a stainless steel vessel having a volume of 500 liters, 246.5 kg of DMF was poured, then 22.4 kg of 2,2-bis{4-(4-aminophenoxy)phenyl}propane (hereinafter called "BAPP") and 1.5 kg of PDA were added, and the whole was stirred. The dissolution of the raw materials added was visually confirmed, then 8.0 kg of BPDA and 12.5 kg of BTDA were added to the solution, and the stirring was continued. After the stirring for 30 minutes, the dissolution of the raw materials was visually confirmed, and a solution containing 8.5 kg of DMF and 0.7 kg of BTDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 4)

In a stainless steel vessel having a volume of 500 liters, 245.9 kg of DMF was poured, then 7.3 kg of ODA and 15.1 kg of BAPP were added, and the whole was stirred. The dissolution of the raw materials added was visually confirmed, then 10.8 kg of BPDA and 11.1 kg of BTDA were added to the solution, and the stirring was continued. After the stirring for 30 minutes, the dissolution of the raw materials was visually confirmed, and a solution containing 9.1 kg of DMF and 0.7 kg of BTDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 5)

In a stainless steel vessel having a volume of 500 liters, 249.5 kg of DMF was poured, then 26.8 kg of BAPP was added, and the whole was stirred. The dissolution of the raw materials added was visually confirmed, then 15.4 kg of BPDA and 2.4 kg of PMDA were added to the solution, and the stirring was continued. After the stirring for 30 minutes, the dissolution of the raw materials was visually confirmed, and a solution containing 5.5 kg of DMF and 0.4 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 6)

In a stainless steel vessel having a volume of 500 liters, 243.8 kg of DMF was poured, then 19.7 kg of ODA was added, and the whole was stirred. The dissolution of the raw materials added was visually confirmed, then 14.5 kg of BPDA and 10.1 kg of PMDA were added to the solution, and the stirring was continued. After the stirring for 30 minutes, the dissolution of the raw materials was visually confirmed, and a solution containing 8.7 kg of DMF and 0.7 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 7)

In a stainless steel vessel having a volume of 500 liters, 245.9 kg of DMF was poured, then 21.5 kg of ODA was added, and the whole was stirred. The dissolution of the raw materials added was visually confirmed, then 22.8 kg of PMDA was added, and the stirring was continued. After the stirring for 30 minutes, the dissolution of the raw materials was visually confirmed, and a solution containing 9.1 kg of DMF and 0.7 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was diluted with DMF so as to give a solid content concentration of 10% by weight. The diluted solution was cast on a PET film (LUMIRROR, manufactured by Toray Industries Inc.) having a thickness of 125 $\mu$m so as to give a final thickness of 20 $\mu$m, and was dried at 80°C for 5 minutes. The dried self-supporting film was released from the PET film, then fixed to a metal pin frame, and dried at 120°C for 3 minutes, at 200°C for 3 minutes, at 300°C for 3 minutes, and at 400°C for 3 minutes, giving a polyimide film.

(Synthesis Example 8)

In a stainless steel vessel having a volume of 500 liters, 242.3 kg of DMF was poured, then 12.1 kg of PDA was added, and the whole was stirred. The dissolution of the raw materials added was visually confirmed, then 31.9 kg of BPDA was added to the solution, and the stirring was continued. After the stirring for 30 minutes, the dissolution of the raw materials was visually confirmed, and a slurry containing 12.7 kg of DMF and 1.0 kg of BPDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 7.

(Synthesis Example 9)

In a stainless steel vessel having a volume of 500 liters, 246.7 kg of DMF was poured, then 19.7 kg of ODA was added, and the whole was stirred. The dissolution of the raw materials added was visually confirmed, then 14.5 kg of BPDA and 10.1 kg of PMDA were added to the solution, and the stirring was continued. After the stirring for 30 minutes, the dissolution of the raw materials was visually confirmed, and a solution containing 8.3 kg of DMF and 0.6 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Synthesis Example 10)

In a stainless steel vessel having a volume of 500 liters, 246.3 kg of DMF was poured, then 16.5 kg of ODA and 2.2 kg of PDA were added, and the whole was stirred. The dissolution of the raw materials added was visually confirmed, then 15.1 kg of BPDA and 10.5 kg of PMDA were added, and the stirring was continued. After the stirring for 30 minutes, the dissolution of the raw materials was visually confirmed, and a solution containing 8.7 kg of DMF and 0.7 kg of PMDA was slowly added while the viscosity of the reaction solution was observed. The addition and stirring were stopped when the viscosity reached 300 Pa·s, giving a polyamic acid solution having a solid content concentration of 15% by weight.

The obtained polyamic acid solution was used to give a polyimide film in the same manner as in Synthesis Example 1.

(Example 15 (reference))

The polyamic acid solution obtained in Synthesis Example 1, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 11.8 kg of isoquinoline, 11.7 kg of acetic anhydride, and 6.6 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 16 (reference))

The polyamic acid solution obtained in Synthesis Example 2, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 11.9 kg of isoquinoline, 11.7 kg of acetic anhydride, and 6.4 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 17 (reference))

The polyamic acid solution obtained in Synthesis Example 3, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 8.8 kg of isoquinoline, 8.7 kg of acetic anhydride, and 12.5 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 18 (reference))

The polyamic acid solution obtained in Synthesis Example 4, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 9.5 kg of isoquinoline, 9.4 kg of acetic anhydride, and 11.2 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 19 (reference))

The polyamic acid solution obtained in Synthesis Example 5, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 8.4 kg of isoquinoline, 8.3 kg of acetic anhydride, and 13.2 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 20 (reference))

The polyamic acid solution obtained in Synthesis Example 6, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mmφ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 13.8 kg of isoquinoline, 13.6 kg of acetic anhydride, and 2.6 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

(Example 21 (reference))

The polyamic acid solution obtained in Synthesis Example 7, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mm$\phi$ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 7.0 kg of isoquinoline, 18.3 kg of acetic anhydride, and 4.8 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 450°C for 60 seconds, giving an electroconductive polyimide film having a thickness of 25 $\mu$m.

(Example 22 (reference))

The polyamic acid solution obtained in Synthesis Example 8, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mm$\phi$ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 7.2 kg of isoquinoline, 19.0 kg of acetic anhydride, and 3.8 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 450°C for 60 seconds, giving an electroconductive polyimide film having a thickness of 25 $\mu$m.

(Example 23 (reference))

The polyamic acid solution obtained in Synthesis Example 9, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mm$\phi$ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 12.7 kg of isoquinoline, 12.6 kg of acetic anhydride, and 4.7 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 $\mu$m.

(Example 24 (reference))

The polyamic acid solution obtained in Synthesis Example 10, Ketjenblack (trade name: ECP600JD, manufactured by Lion Corporation), and DMF were mixed at a weight ratio of 10:1:20 and dispersed with a ball mill, giving a carbon dispersion liquid. The dispersion was carried out with 5-mm$\phi$ zirconia balls at a rotation rate of 600 rpm for a treatment time of 30 minutes.

The carbon dispersion liquid and the polyamic acid solution were uniformly mixed at a weight ratio of 100:183, giving a carbon-dispersed polyamic acid solution. The solution contained 10 parts by weight of Ketjenblack relative to 100 parts by weight of the polyamic acid.

To 150 kg of the carbon-dispersed polyamic acid solution, an imidization accelerator prepared by mixing 13.3 kg of isoquinoline, 13.1 kg of acetic anhydride, and 3.6 kg of DMF was added. The whole was continuously stirred with a mixer, and the resulting solution was extruded from a T-die and cast on a stainless steel endless belt. The cast solution was dried at 130°C for 100 seconds. The dried self-supporting film was released from the endless belt, then fixed to a pin tenter, and heated at 200°C for 30 seconds, at 300°C for 30 seconds, and at 400°C for 60 seconds, giving an electroconductive polyimide film having a thickness of 25 μm.

The inflection points of storage elastic modulus and the amounts of change in storage elastic modulus of the polyimide films obtained in Synthesis Examples 1 to 10 and the solvent barrier properties to an electrolytic solution, the ratios of the volume resistivities in a direction perpendicular to the surface and in the surface direction, and the durabilities against positive electrode potential of the electroconductive polyimide films obtained in Examples 15 to 24 were determined. Table 3 shows the results.

[Table 3]

| Polyimide film | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Example 10 |
|---|---|---|---|---|---|---|---|---|---|---|
| Inflection point of storage elastic modulus (°C) | 240 | 250 | 230 | 250 | 260 | 280 | None | None | 280 | 300 |
| Amount of change in storage elastic modulus | 6.0 | 20.0 | 3.5 | 10.0 | 7.0 | 50.0 | - | - | 60.0 | 65.0 |
| polyimide film | Example 15 | Example 16 | Example 17 | Example 18 | Example 19 | Example 20 | Example 21 | Example 22 | Example 23 | Example 24 |
| Solvent barrier properties to electrolytic solution (mg) | 1.2 | 1.3 | 1.3 | 1.2 | 1.3 | 1.3 | 1.3 | 1.3 | 1.3 | 1.3 |
| Ratio of volume resistivities in direction perpendicular to surface and in surface direction | 2 | 1.6 | 2 | 1.8 | 2 | 10 | 256 | 240 | 95.2 | 171.4 |
| Durability against positive electrode potential (b/a) | 0.02 | 0.02 | 0.02 | 0.02 | 0.02 | 0.02 | 0.02 | 0.02 | 0.02 | 0.02 |

As shown in Table 3, the electroconductive films of Examples 15 to 20, which included the polyimide films having inflection points of storage elastic modulus and amounts of change in storage elastic modulus that were controlled to fall within the ranges (1) and (2) of the present invention, had markedly lower ratios of the volume resistivities in a direction perpendicular to the surface and in the surface direction than those of the electroconductive polyimide films of Examples 21 to 24. The results indicate that the electric conductivity in a direction perpendicular to the surface was selectively increased. Accordingly, the electroconductive polyimide film of the present invention can suppress the increase of the internal resistance of batteries, can increase the power density, and thus is obviously useful as the collector for batteries, specifically, the collector for bipolar batteries.

(Example 25)

On one side of the electroconductive polyimide film obtained in Example 15, a copper thin layer having a thickness of 200 nm was formed by using a sputtering system (product name: NSP-6, manufactured by Showa Shinku Co., Ltd.) and a copper (elementary substance) target at a sputtering gas pressure of 13.5 Pa (argon gas) and an output power of 900 W, giving a lamination film.
On the copper thin layer, copper sulfate electroplating was further performed, giving a lamination film including a copper thin layer having a thickness of 500 nm.

(Example 26)

A lamination film was obtained in the same manner as in Example 25 except that the electroconductive polyimide film obtained in Example 16 was used.

(Example 27)

A lamination film was obtained in the same manner as in Example 25 except that the electroconductive polyimide film obtained in Example 17 was used.

(Example 28)

A lamination film was obtained in the same manner as in Example 25 except that the electroconductive polyimide film obtained in Example 18 was used.

(Example 29)

A lamination film was obtained in the same manner as in Example 25 except that the electroconductive polyimide film obtained in Example 19 was used.

(Example 30)

A lamination film was obtained in the same manner as in Example 25 except that the electroconductive polyimide film obtained in Example 20 was used.
The durabilities against negative electrode potential of the lamination films obtained in Examples 25 to 30 were determined. Table 4 shows the results.

[Table 4]

| | Example 25 | Example 26 | Example 27 | Example 28 | Example 29 | Example 30 |
|---|---|---|---|---|---|---|
| polyimide film | Example 15 | Example 16 | Example 17 | Example 18 | Example 19 | Example 20 |
| Durability against negative electrode potential | 2 | 2 | 2 | 2 | 2 | 2 |

Table 4 indicates that the lamination films of Examples 25 to 30, which included the electroconductive polyimide film of the present invention as the substrate, had excellent durabilities against negative electrode potential.

Reference Signs List

1 Teflon (registered trademark) block
2 O-ring
3 Sample film
4 Film holder
5 Carbonate solvent

**Claims**

1. A collector for bipolar lithium ion secondary batteries, the collector comprising an electroconductive polyimide layer including a conductivity-imparting agent dispersed in a polyimide resin, the polyimide resin being prepared by imidizing a polyamic acid, the polyamic acid being obtained by reacting a tetracarboxylic dianhydride component containing at least one compound selected from the group consisting of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides with a diamine component containing at least one compound selected from the group consisting of oxydianilines, phenylenediamines, and 2,2-bis[4-(4-aminophenoxy)phenyl]propane, wherein a metal layer having a thickness of 0.01 to 2 $\mu$m is formed on at least one side of the electroconductive polyimide layer.

2. The collector for bipolar lithium ion secondary batteries according to claim 1, wherein the at least one tetracarboxylic dianhydride selected from the group consisting of biphenyltetracarboxylic dianhydrides, 3,3',4,4'-benzophenonetetracarboxylic dianhydride, pyromellitic dianhydride, and [isopropylidenebis(p-phenyleneoxy)]diphthalic dianhydrides is contained in an amount of 50% by mole or more in the whole tetracarboxylic dianhydride component.

3. The collector for bipolar lithium ion secondary batteries according to claim 1 or 2, wherein the at least one diamine selected from the group consisting of oxydianilines, phenylenediamines, and 2,2-bis[4-(4-aminophenoxy)phenyl]propane is contained in an amount of 50% by mole or more in the whole diamine component.

4. The collector for bipolar lithium ion secondary batteries according to any one of claims 1 to 3, wherein the polyimide resin satisfies conditions (1) and (2):

   (1) having an inflection point of storage elastic modulus between 200 and 280°C in a dynamic viscoelastic measurement; and
   (2) A1 and A2 satisfying (Formula 1):

   $$50 \geq [(A2/A1) \times 100] \geq 0.1 \qquad \text{(Formula 1)}$$

   where A1 is a storage elastic modulus at a temperature of the inflection point - 20°C, and A2 is a storage elastic modulus at a temperature of the inflection point + 20°C.

5. The collector for bipolar lithium ion secondary batteries according to any one of claims 1 to 4, wherein the conductivity-imparting agent is carbon conductive particles.

6. The collector for bipolar lithium ion secondary batteries according to any one of claims 1 to 5, wherein the electroconductive polyimide layer contains the conductivity-imparting agent and the polyimide resin in a range of conductivity-imparting agent:polyimide resin = 1:99 to 99:1 in terms of weight ratio.

7. The collector for bipolar lithium ion secondary batteries according to any one of claims 1 to 6, wherein the electroconductive polyimide layer has a thickness of 1 to 100 $\mu$m.

8. The collector for bipolar lithium ion secondary batteries according to claim 1, wherein the metal layer is formed of at least one metal selected from the group consisting of gold, silver, copper, platinum, nickel, and chromium.

9. The collector for bipolar lithium ion secondary batteries according to any one of claims 1 to 8, further comprising a metal layer formed by electroplating on the metal layer.

10. The collector for bipolar lithium ion secondary batteries according to claim 9, wherein the metal layer formed by electroplating contains any one metal selected from the group consisting of gold, silver, copper, platinum, nickel, and chromium.

11. The collector for bipolar lithium ion secondary batteries according to claim 9 or 10, wherein the final metal layer has a thickness of 0.1 to 5 $\mu$m.

12. A bipolar lithium secondary battery comprising the collector according to any one of claims 1 to 11.


**Patentansprüche**

1. Ein Kollektor für bipolare Lithiumionen-Sekundärbatterien, wobei der Kollektor eine elektrisch leitende Polyimid-Schicht umfasst, einschließend ein Leitfähigkeit vermittelndes Mittel, welches in einem Polyimidharz dispergiert ist, das Polyimidharz durch Imidierung einer Polyamidsäure hergestellt wird, wobei die Polyamidsäure durch Umsetzung einer Tetracarbonsäuredianyhdrid-Komponente, enthaltend mindestens eine Verbindung, ausgewählt aus der Gruppe bestehend aus Biphenyltetracarbonsäuredianhydriden, 3,3',4,4'-Benzophenontetracarbonsäuredianhydrid, Pyromellitsäuredianhydrid und [Isopropylidenbis(p-phenylenoxy)]diphthalsäuredianhydriden, mit einer Diamin-Komponente enthaltend mindestens eine Verbindung ausgewählt aus der Gruppe bestehend aus Oxydianilinen, Phenylendiaminen und 2,2-Bis[4-(4-aminophenoxy)phenyl]propan, erhalten wird,
wobei eine Metallschicht mit einer Dicke von 0,01 bis 2 $\mu$m auf mindestens einer Seite der elektrisch leitenden Polyimid-Schicht gebildet wird.

2. Der Kollektor für bipolare Lithiumionen-Sekundärbatterien gemäß Anspruch 1, wobei das mindestens eine Tetracarbonsäuredianhydrid, ausgewählt aus der Gruppe bestehend aus Biphenyltetracarbonsäuredianhydriden, 3,3',4,4'-Benzophenontetracarbonsäuredianhydrid, Pyromellitsäuredianhydrid und [Isopropylidenbis(p-phenylenoxy)]diphthalsäuredianhydriden, in einer Menge von 50 Mol-% oder mehr in der gesamten Tetracarbonsäuredianhydrid-Komponente enthalten ist.

3. Der Kollektor für bipolare Lithiumionen-Sekundärbatterien gemäß Anspruch 1 oder 2, wobei das mindestens eine Diamin, ausgewählt aus der Gruppe bestehend aus Oxydianilinen, Phenylendiaminen und 2,2-Bis[4-(4-aminophenoxy)phenyl]propan, in einer Menge von 50 Mol-% oder mehr in der gesamten Diamin-Komponente enthalten ist.

4. Der Kollektor für bipolare Lithiumionen-Sekundärbatterien gemäß einem der Ansprüche 1 bis 3, wobei das Polyimidharz die Bedingungen (1) und (2) erfüllt:

   (1) es weist einen Wendepunkt des Speicherelastizitätsmoduls zwischen 200 und 280 °C in einer dynamischen Viskoelastizitätsmessung auf; und
   (2) A1 und A2 erfüllen (Formel 1):

$$50 \geq [(A2/A1) \times 100] \geq 0{,}1 \qquad \text{(Formel 1)}$$

   wobei A1 ein Speicherelastizitätsmodul bei einer Temperatur des Wendepunktes von -20 °C ist,
   und A2 ein Speicherelastizitätsmodul bei einer Temperatur des Wendepunktes von +20 °C ist.

5. Der Kollektor für bipolare Lithiumionen-Sekundärbatterien gemäß einem der Ansprüche 1 bis 4, wobei das Leitfähigkeit vermittelnde Mittel leitfähige Kohlenstoffteilchen ist.

6. Der Kollektor für bipolare Lithiumionen-Sekundärbatterien gemäß einem der Ansprüche 1 bis 5, wobei die elektrisch leitende Polyimid-Schicht das Leitfähigkeit vermittelnde Mittel und das Polyimidharz in einem Verhältnis von Leitfähigkeit vermittelndem Mittel:Polyimidharz =1:99 bis 99:1 in Bezug auf das Massenverhältnis enthält.

**7.** Der Kollektor für bipolare Lithiumionen-Sekundärbatterien gemäß einem der Ansprüche 1 bis 6, wobei die elektrisch leitende Polyimid-Schicht eine Dicke von 1 bis 100 $\mu$m aufweist.

**8.** Der Kollektor für bipolare Lithiumionen-Sekundärbatterien gemäß Anspruch 1, wobei die Metallschicht aus mindestens einem Metall, ausgewählt aus der Gruppe bestehend aus Gold, Silber, Kupfer, Platin, Nickel und Chrom, geformt ist.

**9.** Der Kollektor für bipolare Lithiumionen-Sekundärbatterien gemäß einem der Ansprüche 1 bis 8, ferner umfassend eine Metallschicht, welche durch Galvanisieren auf der Metallschicht geformt wird.

**10.** Der Kollektor für bipolare Lithiumionen-Sekundärbatterien gemäß Anspruch 9, wobei die Metallschicht geformt durch Galvanisieren ein Metall, ausgewählt aus der Gruppe bestehend aus Gold, Silber, Kupfer, Platin, Nickel und Chrom, enthält.

**11.** Der Kollektor für bipolare Lithiumionen-Sekundärbatterien gemäß Anspruch 9 oder 10, wobei die letzte Metallschicht eine Dicke von 0,1 bis 5 $\mu$m aufweist.

**12.** Eine bipolare Lithium-Sekundärbatterie umfassend den Kollektor gemäß einem der Ansprüche 1 bis 11.

**Revendications**

**1.** Collecteur pour batteries secondaires au lithium-ion bipolaires, le collecteur comprenant une couche de polyimide électriquement conductrice contenant un agent conférant une conductivité dispersé dans une résine de polyimide, la résine de polyimide étant préparée par imidation d'un poly(acide amique), le poly(acide amique) étant obtenu par réaction d'un composant dianhydride tétracarboxylique contenant au moins un composé choisi dans le groupe constitué par les dianhydrides biphényltétracarboxyliques, le dianhydride 3,3',4,4'-benzophénonetétracarboxylique, le dianhydride pyromellitique, et les dianhydrides [isopropylidènebis(p-phénylène-oxy)]diphtaliques avec un composant diamine contenant au moins un composé choisi dans le groupe constitué par les oxydianilines, les phénylènediamines, et le 2,2-bis[4-(4-aminophénoxy)phényl]propane,
dans lequel une couche métallique ayant une épaisseur de 0,01 à 2 $\mu$m est formée sur au moins un côté de la couche de polyimide électriquement conductrice.

**2.** Collecteur pour batteries secondaires au lithium-ion bipolaires selon la revendication 1, dans lequel l'au moins un dianhydride tétracarboxylique choisi dans le groupe constitué par les dianhydrides biphényltétracarboxyliques, le dianhydride 3,3',4,4'-benzophénonetétracarboxylique, le dianhydride pyromellitique, et les dianhydrides [isopropylidènebis(p-phénylène-oxy)]diphtaliques, est contenu en une quantité de 50 % en moles ou plus dans le composant dianhydride tétracarboxylique total.

**3.** Collecteur pour batteries secondaires au lithium-ion bipolaires selon la revendication 1 ou 2, dans lequel l'au moins une diamine choisie dans le groupe constitué par les oxydianilines, les phénylènediamines, et le 2,2-bis[4-(4-aminophénoxy)phényl]propane, est contenue en une quantité de 50 % en moles ou plus dans le composant diamine total.

**4.** Collecteur pour batteries secondaires au lithium-ion bipolaires selon l'une quelconque des revendications 1 à 3, dans lequel la résine de polyimide satisfait aux conditions (1) et (2) :

(1) elle a un point d'inflexion du module élastique au stockage compris entre 200 et 280 °C dans une mesure de viscoélasticité dynamique ; et
(2) A1 et A2 satisfont à (formule 1) :

$$50 \geq [(A2/A1) \times 100] \geq 0{,}1 \qquad \text{(Formule 1)}$$

où A1 est le module élastique au stockage à la température du point d'inflexion - 20 °C, et A2 est le module élastique au stockage à la température du point d'inflexion + 20 °C.

**5.** Collecteur pour batteries secondaires au lithium-ion bipolaires selon l'une quelconque des revendications 1 à 4, dans lequel l'agent conférant une conductivité est constitué de particules conductrices de carbone.

6. Collecteur pour batteries secondaires au lithium-ion bipolaires selon l'une quelconque des revendications 1 à 5, dans lequel la couche de polyimide électriquement conductrice contient l'agent conférant une conductivité et la résine de polyimide en un rapport en poids de l'agent conférant une conductivité à la résine de polyimide de 1/99 à 99/1.

7. Collecteur pour batteries secondaires au lithium-ion bipolaires selon l'une quelconque des revendications 1 à 6, dans lequel la couche de polyimide électriquement conductrice a une épaisseur de 1 à 100 $\mu$m.

8. Collecteur pour batteries secondaires au lithium-ion bipolaires selon la revendication 1, dans lequel la couche métallique est formée d'au moins un métal choisi dans le groupe constitué par l'or, l'argent, le cuivre, le platine, le nickel, et le chrome.

9. Collecteur pour batteries secondaires au lithium-ion bipolaires selon l'une quelconque des revendications 1 à 8, comprenant en outre une couche métallique formée par placage électrolytique sur la couche métallique.

10. Collecteur pour batteries secondaires au lithium-ion bipolaires selon la revendication 9, dans lequel la couche métallique formée par placage électrolytique contient un métal quelconque choisi dans le groupe constitué par l'or, l'argent, le cuivre, le platine, le nickel, et le chrome.

11. Collecteur pour batteries secondaires au lithium-ion bipolaires selon la revendication 9 ou 10, dans lequel la couche métallique finale a une épaisseur de 0,1 à 5 $\mu$m.

12. Batterie secondaire au lithium-ion bipolaire comprenant le collecteur selon l'une quelconque des revendications 1 à 11.

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000200619 A
- US 2012171567 A
- US 2011311871 A
- JP 2011181520 A